(19) Europäisches Patentamt
European Patent Office
Office européen des brevets

(11) **EP 1 947 154 B1**

(12) **EUROPEAN PATENT SPECIFICATION**

(45) Date of publication and mention of the grant of the patent:
**13.01.2016 Bulletin 2016/02**

(21) Application number: **06811753.0**

(22) Date of filing: **13.10.2006**

(51) Int Cl.:
*C09D 163/00* (2006.01)          *B05D 7/24* (2006.01)
*B32B 7/10* (2006.01)          *B32B 27/38* (2006.01)
*C09D 5/08* (2006.01)          *C09D 7/12* (2006.01)
*B32B 9/06* (2006.01)          *B32B 27/04* (2006.01)
*B32B 27/20* (2006.01)

(86) International application number:
**PCT/JP2006/320475**

(87) International publication number:
**WO 2007/046301 (26.04.2007 Gazette 2007/17)**

(54) **POLYFUNCTIONAL EPOXY RESIN COATING COMPOSITION CONTAINING RUST-PREVENTIVE PIGMENT, COATING FILM OBTAINED THEREFROM, BASE COATED WITH THE COATING FILM, AND METHOD OF RUST PREVENTION**

POLYFUNKTIONELLE EPOXIDHARZBESCHICHTUNGSMASSE MIT ROSTVERHINDERNDEM PIGMENT, DARAUS ERHALTENER BESCHICHTUNGSFILM, MIT DEM BESCHICHTUNGSFILM BESCHICHTETES SUBSTRAT SOWIE ROSTVERHINDERUNGSVERFAHREN

COMPOSITION DE REVÊTEMENT EN RÉSINE ÉPOXYDE POLYFONCTIONNELLE CONTENANT UN PIGMENT ANTIROUILLE, FILM DE REVÊTEMENT OBTENU À PARTIR DE CELLE-CI, BASE RECOUVERTE DU FILM DE REVÊTEMENT ET PROCÉDÉ DE PROTECTION CONTRE LA ROUILLE

(84) Designated Contracting States:
**ES FR**

(30) Priority: **20.10.2005 JP 2005306074**

(43) Date of publication of application:
**23.07.2008 Bulletin 2008/30**

(73) Proprietor: **CHUGOKU MARINE PAINTS, LTD.**
**Ohtake-shi**
**Hiroshima 739-0652 (JP)**

(72) Inventor: **KONDOU, Katsumi,**
**CHUGOKU MARINE PAINTS, LTD.**
**Ohtake-shi, Hiroshima 7390652 (JP)**

(74) Representative: **Hoffmann Eitle**
**Patent- und Rechtsanwälte PartmbB**
**Arabellastraße 30**
**81925 München (DE)**

(56) References cited:
EP-A1- 0 846 710          EP-A1- 1 442 799
JP-A- 09 206 675          JP-A- 11 343 454
JP-A- 60 215 075          JP-A- 2001 181 562
JP-A- 2001 279 167          JP-A- 2002 080 564
JP-A- 2002 114 943          JP-A- 2003 171 611
JP-A- 2005 074 272

**Description**

TECHNICAL FIELD

The present invention relates to a rust preventive pigment-containing epoxy resin (corrosion resistant) paint composition, a coating film prepared from the paint composition, a substrate coated with the coating film and a method for preventing corrosion using the paint composition.

More specifically, the invention relates to a rust preventive pigment-containing polyfunctional epoxy resin paint composition which can be used in the field that corrosion resistance is required, for example, coating for steel constructions including ships, bridges and plants or in the field that not only corrosion resistance but also high adhesion strength at very low temperatures are required. Particularly, the invention relates to a rust preventive pigment-containing polyfunctional epoxy resin paint composition which can form, when applied on the LNG tank inner wall surface (inner hull of a ship) of an LNG carrier, a coating film having excellent corrosion resistance and also excellent adhesion properties against both of a hull and a mastic (a resin rope i.e. a resin material for regulating the spaces between a heat shielding box and an inner hull wall) which is interposed into between a ship body (inner hull) and a heat shielding layer formed on the inner peripheral surface of the hull even at very low temperatures of about -25°C. Further, the present invention relates to a coating film having the above properties which is obtainable from the paint composition, a substrate coated with the coating film, a laminated structure having the coating film (layer) and a method for preventing corrosion using the paint composition.

BACKGROUND ART

In the field that corrosion resistance is required, for example, steel constructions including ships, bridges, plants or the like, it is general to apply a primary rust preventive primer (inorganic zinc shop primer or organic zinc primer) on them. The general primary rust preventive primer, however, cannot attain sufficiently high adhesion strength by bonding a hull and a heat shielding layer in an LNG carrier. As the primary anticorrosive primer having the property (high adhesion strength), there is a primary anticorrosive primer containing zinc chromate. The zinc chromate, however, is harmful for the human body and has a problem in environmental contamination (disclosed in, for example, Patent Document 1: JP-A-H10(1998)-219138, Patent Document 2: JP-A-H8(1996)-57417, Patent Document 3: JP-A-H7(1995)-171497).

A primary rust preventive primer (coating film) having high adhesion strength is formed by subjecting a steel material to primary surface treatment with shot blasting in a shot line and thereafter applying an inorganic zinc shop primer. After steel materials prepared through the primary rust preventive treatment are made into blocks by assembling with welding, the blocks are mostly allowed to stand outside in an exposed condition for a long period of time. Furthermore, they are assembled into an LNG carrier or the like and then they are coated outside after removal of rust generated during the exposure and the film prepared by the primary rust preventive treatment in a secondary surface treatment.

When the inorganic zinc shop primer (primary rust preventive coating film) is not removed sufficiently with the secondary surface treatment, sufficiently high adhesion strength cannot be obtained even if the primary rust preventive primer capable of giving high adhesion strength is applied on the surface thereof. Particularly, in an inside position of an LNG tank which position is exposed at low temperatures of -25°C, sufficiently high adhesion strength cannot be obtained because the adhesion strength therein lowers extremely.

In the field that corrosion resistance is required, such as steel constructions including ships, bridges, plants or the like, an epoxy resin anticorrosive paint may be applied other than the inorganic zinc shop primer. The epoxy resin anticorrosive paint, however, is not suitable for application in a shot line because the drying and curing of a coating film need many hours.

(1) JP-A-H9(1997)-206675 (Patent Document 4) discloses a method for preventing the rust surface from corrosion. In the method, a primary rust preventive paint having a regulated paint viscosity of from 15 sec to 25 sec / Ford cup #4 is applied on a rust steel surface in an amount such that the dry film thickness is from 15 μm to 30 μm. Furthermore, it discloses that an example of the primary rust preventive paint is an epoxy zinc primer containing an epoxy resin, a curing agent such as an aliphatic polyamine, and zinc powder, and the epoxy zinc primer may contain additives for paints, for example, an adhesion-imparting agent such as silicate resin etc and a dehydrating agent (moisture adsorbent).

The paint disclosed in Patent Document 4, however, is not designed to use at very low temperatures of -25°C or lower. The patent document 4, further, does not disclose the functional group number and molecular weight of the epoxy resin used, nor an epoxy resin (anticorrosive) composition blended with a dehydrating agent and a silane coupling agent. Particularly, it does not disclose whether the inner wall surface of an LNG carrier and a mastic (resin rope) which will be exposed at very low temperatures (-25°C or lower) can be bonded with high adhesion strength or not. The use of the epoxy resin disclosed in the patent document 4 has a problem in that the resulting paint is not suitable for coating in a shot line because of having a low curing rate.

(2) JP-A-2000-239570 (Patent Document 5) discloses an anticorrosive paint composition, which is applied on the frictional joint parts of large-scale steel constructions such as brides or plants. The composition comprises (A) an epoxy resin, (B) an amine curing agent, (C) a silane coupling agent and (D) zinc powder having a particle diameter of from 10 $\mu$m to 50 $\mu$m, and which contains the silane coupling agent in an amount of from 0.5 to 20 parts by weight based on 100 parts by weight of the resin solid content in the paint, and the zinc powder (D) in an amount of from 50 % to 95 % by weight in the paint solid content. It also discloses that, as the component (A), a bisphenol A type polyfunctional epoxy resin having a functional number of 2.

The patent document 5, furthermore, discloses that the use of the anticorrosive paint can form a coating film having high adhesion with steel materials and the application thereof on frictional joint parts in large-scale steel constructions such as bridges or plants can improve frictional resistance in the joint parts.

The patent document 5 does not disclose any plans to use the anticorrosive paint at very low temperatures nor any dehydrating agents and therefore, it does not disclose whether, an inner wall surfaces and a mastic of an LNG carrier which will be exposed at very low temperatures can be bonded with high adhesion strength, or not.

(3) JP-A-2002-86066 (Patent document 6) discloses a method for forming a coating film by applying a coating paint for mist coatless coating on the surface coated with an inorganic zinc rich paint wherein the coating paint comprises (A) an epoxy resin, (B) an amine curing agent and (C) zinc powder excluding scaly or leaf-like zinc and has a volume concentration of the whole pigments including the zinc powder (C) of from 20 % to 70%. It also discloses that the coating paint is applied on a tank or the like as a heavy-duty anticorrosive coating paint and comprises a silicon inorganic binder as essential components, and further a dehydrating agent such as methyl orthoformate, ethyl orthoformate or dimethoxypropane. It, further, discloses, as the epoxy resin (A), a resin in a liquid or solid state at ordinary temperatures having two or more epoxy groups, preferably about 2 from to 5 epoxy groups in one molecule. It, furthermore, discloses that use can be made of tetraalkoxy silicate, alkyltrialkoxy silicate, dialkyldialkoxy silicate and their partial condensates and/or hydrolysis initial condensates obtainable by condensation reaction of them in the presence of water and an acid catalyst.

The patent document 6, however, has a limitation that the anticorrosive coating paint can be applied on only the surface coated with the inorganic zinc rich paint and has no plan to use it at very low temperatures. Therefore, it does not disclose whether the paint can bond inner wall surface and a mastic of an LNG carrier which will be exposed at very low temperatures, with high bonding strength, or not.

JP 2005-074272 A (Patent Document 7) describes a coating method for forming a corrosion- and weather-resistant composite layer coating film, wherein a surface is coated with a zinc-rich coating containing an epoxy resin based binder and zinc powder and then with a coating composition containing an acrylic resin, an epoxy resin having at least two epoxy groups in a molecule and an amine curing agent containing aminosilane.

EP 0 846 710 A1 (Patent Document 8) describes a resin coating composition comprising an epoxy resin having two or more epoxy groups in its molecule and a number average molecular weight of 250 to 4,500, a ketimine compound, a dehydrating agent, at least one modified epoxy resin and zinc dust.

Patent Document 1: JP-A-H10(1998)-219138
Patent Document 2: JP-A-H8(1996)-57417
Patent Document 3: JP-A-H7(1995)-171497
Patent Document 4: JP-A-H9(1997)-206675
Patent Document 5: JP-A-2000-239570
Patent Document 6: JP-A-2002-86066
Patent Document 7: JP-A-2005-074272
Patent Document 8: EP 0 846 710 A1

DISCLOSURE OF THE INVENTION

[Object of the Invention]

The present invention is intended to solve the problems associated with the above prior arts. It is an object of the invention to provide a rust preventive pigment-containing polyfunctional epoxy resin paint composition which can be used in the field that corrosion resistance is required, for example, coating for steel constructions including ships, bridges and plants or in the field that not only corrosion resistance but also high adhesion strength at very low temperatures are required, particularly, which can form, when applied on the LNG tank inner wall surface (inner hull of a ship) of an LNG carrier, a coating film having excellent corrosion resistance and also excellent adhesion properties against both of a hull and a mastic (a resin rope i.e. a resin material for regulating the spaces between an insulating tank and an inner hull wall) which is interposed into between a ship body (inner hull) and a heat shielding layer formed on the inner peripheral surface of the hull even at very low temperatures of about -25°C. It is a further object of the invention to provide a coating film having the above properties which film is obtainable from the paint composition, a substrate coated with the coating film, a laminated structure having the coating films (layers), and a method for preventing corrosion using the paint composition.

[Means for Solving the Object]

The rust preventive pigment-containing polyfunctional epoxy resin paint composition according to the present invention (hereinafter simply referred to paint, paint composition or epoxy paint) comprises:

(A) a polyfunctional epoxy resin,
(B) a modified aliphatic polyamine
(C) a rust preventive pigment,
(D) a silane coupling agent and
(E) a moisture absorbent.

In the invention, the polyfunctional epoxy resin (A) contains from 6 to 9 epoxy groups, as determined with a theoretical value calculated by dividing its number average molecular weight Mn (measured with GPC relative to polystyrene standards, referred to hereinafter) by epoxy equivalent.

The polyfunctional epoxy resin (A) preferably has a number average molecular weight of not less than 5000 and an epoxy equivalent of not less than 700, more preferably a number average molecular weight of from 5500 to 9000 and an epoxy equivalent of from 750 to 1000.

In the present invention, the modified aliphatic polyamine (B) is preferably prepared by submitting a bisphenol A type solid epoxy resin to addition reaction on ethylene diamine or its compound to form an adduct and diluting it with a solvent.

The rust preventive pigment (C) used in the invention is preferably at least one, or two or more compounds selected from the group consisting of zinc powder, zinc alloy powder, zinc phosphate compounds, calcium phosphate compounds, aluminum phosphate compounds, magnesium phosphate compounds, zinc phosphite compounds, calcium phosphite compounds, aluminum phosphite compounds, strontium phosphite compounds, aluminum tripolyphosphate compounds, molybdate compounds, zinc cyanamide compounds, borate compounds, nitro compounds and composite oxides.

The rust preventive pigment (C) preferably has an average particle diameter of not more than 20 $\mu$m, more preferably not more than 15 $\mu$m, furthermore preferably not more than 10 $\mu$m.

The silane coupling agent (D) used in the invention is preferably at least one selected from the group consisting of $\beta$-(3,4-epoxycyclohexyl)ethyltrimethoxy silane, $\gamma$-glycidoxypropyltrimethoxy silane, $\gamma$-glycidoxypropylmethyldiethoxy silane, N-$\beta$(aminoethyl)$\gamma$-aminopropyltrimethoxy silane, N-$\beta$(aminoethyl)$\gamma$-aminopropylmethyl dimethoxy silane, $\gamma$-aminopropyl triethoxy silane, N-phenyl-$\gamma$-aminopropyl trimethoxy silane and $\gamma$-chloropropyl trimethoxy silane.

The moisture absorbent (E) used in the invention is preferably at least one or two or more selected from the group consisting of synthetic zeolite, orthomethyl formate, orthoethyl formate, tetraethoxy silane (Ethyl Silicate 28) and hydrolysis initial condensates of tetraethyl silicates (Ethyl Silicate 40).

The paint composition of the invention preferably comprises a pigment (F) which is desirably at least one selected from the group consisting of calcium carbonate, clay, talc, silica, mica, sedimentation barium, potassium feldspar, albite, zirconium silicate, zinc oxide, titanium oxide, red iron oxide, iron oxide, carbon black, phthalocyanine green and phthalocyanine blue.

The paint composition of the invention, further, preferably comprises an organic solvent (G) capable of solving epoxy resins.

The paint composition of the invention, furthermore, preferably comprises at least one paint additive selected from dispersants, thickners, anti-sagging agents, thixotropic agents, anti-settling agents and anti-color segregating agents.

The rust preventive pigment-containing polyfunctional epoxy resin paint composition according to the invention (paint composition, which contains a solvent, referred to hereinafter) comprises:

the polyfunctional epoxy resin (A) in an amount of usually from 5 wt% to 50 wt%, preferably from 10 wt% to 40 wt%, especially from 10 wt% to 30 wt%,
the modified aliphatic polyamine (B) in an amount of usually from 5 wt% to 40 wt%, preferably from 5 wt% to 30 wt%, especially from 10 wt% to 30 wt%,
the rust preventive pigment (C) in an amount of usually from 15 wt% to 70 wt%, preferably from 20 wt% to 60 wt%, especially from 20 wt% to 40 wt%,
the silane coupling agent (D) in an amount of usually from 0.1 wt% to 3 wt%, preferably from 1 wt% to 3 wt%, especially from 1 wt% to 2 wt%, and
the moisture absorbent (E) in an amount of usually from 0.1 wt% to 3 wt%, preferably from 0.3 wt% to 2 wt%. The paint composition desirably comprises the above components in the preferable amounts (wt%) from the viewpoint of the resultant effects. In the paint composition, the content of each of the components from (A) to (E) (wt%) is an amount containing no solvent, namely, a value converted to solid content and the total amount of the solid components containing no solvent in a paint is 100 wt%, also referred to hereinafter.

The anticorrosive coating film of the invention comprises any one of the above rust preventive pigment-containing polyfunctional epoxy resin paint compositions.

The coating film-coated substrate of the invention has a surface coated with the anticorrosive coating film formed from any one of the above rust preventive pigment-containing polyfunctional epoxy resin paint compositions.

In the coating film-coated inner wall surface of a ship tank according to the invention, the surface of a tank inner wall, which is a substrate, is coated with the anticorrosive coating film formed from any one of the above rust preventive pigment-containing polyfunctional epoxy resin paint compositions.

In the coating film-coated inner wall surface of an LNG tank according to the invention, the tank inner wall surface, which is a substrate, is coated with the anticorrosive coating film formed from any one of the above rust preventive pigment-containing polyfunctional epoxy resin paint compositions.

The laminated structure of the invention is formed by laminating an anticorrosive coating film layer, a mastic (resin rope) which binds the anticorrosive coating film layer and a heat shielding layer, and the heat shielding layer in this order (tank inner wall surface / anticorrosive coating film layer / mastic / heat shielding layer) on the surface of an inner wall of an LNG tank, which tank is a substrate, and the anticorrosive coating film layer is formed from any one of the above rust preventive pigment-containing polyfunctional epoxy resin paint compositions.

The method for preventing corrosion of steel materials according to the invention comprises coating the surface of a substrate with the anticorrosive coating film layer formed from any one of the above rust preventive pigment-containing polyfunctional epoxy resin paint compositions.

In a preferred embodiment of the method for preventing corrosion of steel materials according to the invention, on the surface of a substrate, a paint which comprises any one of the above rust preventive pigment-containing polyfunctional epoxy resin paint compositions and is regulated to have a paint solution viscosity, measured with #4 Ford cup, of from 10 sec to 20 sec, is preferably applied in a thickness such that the dried coating film is from 10 $\mu$m to 40 $\mu$m. In this application, it is preferred to apply it using a coating special line (a facility so-called shot line) indoors from the viewpoint of coating efficiency and adhesion strength with a mastic in the application of the paint of the invention after secondary surface treatment.

The rust preventive pigment-containing polyfunctional epoxy resin paint composition set according to the invention comprises a main unit which comprises a main component containing any one of the above polyfunctional epoxy resins (A) and a curing agent unit which comprises a curing agent component containing any one of the above modified aliphatic polyamines (B), wherein at least the rust preventive pigment (C), the silane coupling agent (D) and the moisture absorbent (E) are contained independently in the main component and/or the curing agent component.

[Effect of the Invention]

According to the present invention, provided is a rust preventive pigment-containing polyfunctional epoxy resin paint composition which can be used in the field that corrosion resistance is required, for example, coating for steel constructions including ships, bridges and plants or in the field that not only corrosion resistance but also high adhesion strength at very low temperatures are required, particularly, which can form, when applied on the LNG tank inner wall surface (inner hull of a ship) of an LNG carrier, a coating film having excellent corrosion resistance and also excellent adhesion properties against both of a hull and a mastic (a resin rope i.e. a resin material for regulating the spaces between an insulating tank and an inner hull wall) which is interposed into between a ship body (inner hull) and a heat shielding layer formed on the inner peripheral surface of the hull even at very low temperatures of about -25°C. Furthermore, the present invention provides a coating film obtainable from the paint composition and having the above properties, a laminated structure having a substrate coated with the coating film and the coating film (layer), and a process for preventing corrosion using the paint composition.

The paint composition set of the invention has excellent storage stability and other properties.

BRIEF DESCRIPTION OF FIGURE

FIG. 1 shows a shape and a dimension of a test piece used in a shear tensile test according to the invention.
FIG. 2 shows a shape and a dimension of a test piece used in a vertical tensile test according to the invention.

BEST MODE FOR CARRYING OUT THE INVENTION

The rust preventive pigment-containing polyfunctional epoxy paint composition, the coating film formed from the composition, the substrate coated with the coating film and the process for corrosion prevention according to the invention will be described in detail below.

Rust Preventive Pigment-Containing Polyfunctional Epoxy Resin Paint Composition

The anticorrosive pigment-containing polyfunctional epoxy resin paint composition according to the invention (simply referred to paint or paint composition) comprises the polyfunctional epoxy resin (A), the modified aliphatic polyamine (B), the anticorrosive pigment (C), the silane coupling agent (D) and the moisture absorbent (E).

The components from (A) to (E) contained in the paint each are described below successively.

(A) Polyfunctional epoxy resin

The polyfunctional epoxy resin (A) in the invention has a theoretical value of the number of epoxy groups, determined with dividing the number average molecular weight Mn (measurement condition: measured in GPC, value relative to polystyrene, referred to hereinafter) by epoxy equivalent, of 1 or more. The polyfunctional epoxy resin (A) used in the invention has a theoretical value determined with dividing the number average molecular weight by epoxy equivalent of from 6 to 9, most preferably about 7. When the rust preventive pigment-containing polyfunctional epoxy paint composition contains the polyfunctional epoxy resin (A) having epoxy groups in the above amount, a coating film satisfying the required high adhesion strength can be formed. Therefore, the composition has excellent drying properties in shot line coating. It is general to increase the amount of a resin to a pigment in order to increase the strength of a coating film. Consequently, the barrier effect of the coating film lowers and thereby the corrosion resistance also lowers. However, the polyfunctional epoxy resin of the paint according to the invention has a high molecular weight, and therefore the barrier effect of a coating film does not lower and also the corrosion resistance does not lower.

The polyfunctional epoxy resin (A) can be prepared by, for example, a process for carrying out polymer reaction such that a bisphenol A type epoxy resin (a), which is a base, is modified with resol having a phenol skeleton and a methylol group, and the methylol and hydroxyl groups, phenolic hydroxyl groups and epoxy rings in the epoxy resin (a) are condensed.

In the first embodiment of the invention, the polyfunctional epoxy resin (A) preferably has an Mn of at least 5000 and an epoxy equivalent of at least 700 taking high adhesion strength of a resulting coating film (layer) and a mating part (examples: inner wall surface of LNG tank or mastic), corrosion resistance and curing properties in forming a coating film into consideration. Furthermore, it preferably has an Mn of from 5500 to 9000 and an epoxy equivalent of from 750 to 1000 taking exhibiting drying properties and high adhesion strength into consideration.

In the invention, the paint containing the epoxy resin having a value of epoxy group of from 6 to 9 prepared in the first embodiment has excellent coating properties in a shot line and a resulting rust preventive paint and a resulting coating film have drying properties, high adhesion strength and corrosion resistance.

Even if the epoxy resin prepared in the present invention is used as the component (A) in the invention, it is thought that the combined use of the epoxy resin and the component (B), i.e. the modified aliphatic polyamine (B) greatly influences the high adhesion strength of a resulting coating film as determined in a tensile test by GAZTRANSPORT & TECHNIGAZ SAs in France.

The polyfunctional epoxy resin (A) is contained in an amount of usually from 5 wt% to 50 wt%, preferably from 10 wt% to 40 wt%, specially from 10 wt% to 30 wt% based on 100 wt% of the total amount of the solid content contained in the rust preventive pigment-containing polyfunctional epoxy resin paint composition (also called to paint, which contains a solvent, referred to hereinafter) in regard to drying properties, high adhesion strength and corrosion resistance.

The component (A) is generally reacted with the following modified aliphatic polyamine (B) in a curing coating film. The constituents derived from the component (A) are contained in an amount of usually from 5 wt% to 50 wt%, preferably from 10 wt% to 40 wt% in the coating film (dried coating film) prepared by drying the paint provided that the amount is determined from the weight of the solid content (non-volatile components) in the paint, i.e. the components excluding a solvent for the above reasons.

(B) Modified aliphatic polyamine

Conventionally known epoxy resin curing agents can be used as the modified aliphatic polyamine (B) and are described in, for example, paragraph [0023] in JP-A-2002-86066 (KANSAI PAINT), paragraph [0053] in JP-A-2003-171611 or paragraphs [0121] to [0127] in JP-A-2005-15572. Specific examples are aliphatic polyamines (B1) such as ethylene diamine, propylene diamine, butylene diamine, hexamethylene diamine, diethylene triamine, triethylene tetramine, tetraethylene pentamine or pentaethylene hexamine; amine adducts (B2) obtainable by reacting the above aliphatic polyamine with an epoxy compound (containing epoxy resin) having at least one epoxy group; Michael adduct polyamines (B3) obtainable by addition reaction of the above aliphatic polyamine and an unsaturated compound; Mannich adduct polyamines (B4) obtainable by condensation reaction of the aliphatic polyamine, formalin (formaldehyde) and a phenol; and cyanoethyl compounds (B5) obtainable by reaction of the aliphatic polyamine and acrylonitrile. They are favorably used for the reasons that the curing properties of a coating film are high and effective for adhesion strength and drying properties. The aliphatic polyamines may be used singly or in combination by a method of mixing two or more those.

Of these aliphatic polyamines, the amine adducts (B2) obtainable by addition reaction of a bisphenol A solid epoxy resin (for example, Epikote#1001 type) to ethylene diamine or an ethylene diamine-containing compound (for example, ethylene diamine content of about from 90 % to 99 %), and diluting them with a solvent (for example, xylene, N-butanol or combinations thereof) are particularly preferred in the above effects, and further those having an active hydrogen equivalent (typical value) of from 100 to 600 are preferred.

Commercially available amine adducts are, for example, "LUCKAMIDE TD961" (modified aliphatic polyamine corresponding to the adducts (B2), the active hydrogen equivalent (typical value):356), "LUCKAMIDE WH-137" and "LUCKAMIDE WH-630" which are produced by DAINIPPON INK AND CHEMICALS,INCORPORATED, "ADEKA HARDENER EH-210" and "ADEKA HARDENER EH-220" which are produced by ADEKA Corporation, "FUJICURE-5410", "FUJICURE-5420" and "FUJICURE FXE-1000" which are produced by FUJI KASEI KOGYO Co., Ltd, "ACI HARDENER (R)K-39" which is produced by PTI JAPAN Co. (IBPTR JAPAN Co.), and Mannich modified aliphatic polyamine "SUNMIDE (R)CX-1154" which is produced by SANWA CHEMICAL INDUSTRY CO.,LTD.

The modified aliphatic polyamines (B) is contained in an amount of usually from 5 wt% to 40 wt%, preferably from 5 wt% to 30 wt%, especially from 10 wt% to 30 wt% in the total amount (100 wt%) of non-volatile components (solid content) in the paint (containing a solvent, referred to hereinafter).

The modified aliphatic polyamine (B), further, is desirably contained in an amount of usually from 15 to 100 parts by weight, preferably from 20 to 95 parts by weight based on 100 parts by weight of the solid content of the polyfunctional epoxy resin (A) in the drying properties and high adhesion strength. The modified aliphatic polyamine (B) is usually present in a dried and cured coating film as a reactant with epoxy resins such as the polyfunctional epoxy resin (A).

(C) Rust preventive pigment

The rust preventive pigments (C) has an average particle diameter of preferably not more than 20 $\mu$m, more preferably not more than 15 $\mu$m, especially about 10 $\mu$m. When the rust preventive pigment has an average particle diameter of more than 20 $\mu$m, the dispersibility of these components to a resulting paint composition is inferior to cause generation of coating non-uniformity. As a result, the denseness and rust prevention properties of a coating film are apt to be inferior. Zinc alloys, which are rust preventive pigments other than zinc powder, are conventionally known alloys such as zinc-aluminum and zinc-magnesium. Examples thereof are zinc phosphate-aluminum compounds "LF BOWSEI CP-Z" available by KIKUCHI COLOR & CHEMICALS CORPORATION, zinc phosphite-calcium compounds "PROTEX YM-60" available by TAIHEI CHEMICAL INDUSTRIAL Co., Ltd, zinc phosphite-strontium compounds "PROTEX YM-92NS" available by TAIHEI CHEMICAL INDUSTRIAL Co., Ltd, tripolyphosphate-aluminum compounds "K-WHITE #84" available by TAYCA CORPORATION, molybdate compounds "LF BOWSEI M-PSN" available by KIKUCHI COLOR & CHEMICALS CORPORATION and zinc cyanamide compounds "LF BOWSEI ZK-32" available by KIKUCHI COLOR & CHEMICALS CORPORATION.

These anticorrosive pigments (C) are used in an amount of usually from 15 wt% to 70 wt%, preferably from 20 wt% to 60 wt%, specifically from 20 wt% to 40 wt% based on 100 wt% of the total of the solid content in the paint from the viewpoints of the corrosion resistance.

These rust preventive pigments are desirably contained in an amount of usually from 15 wt% to 70 wt%, preferably from 20 wt% to 60 wt% in the dried coating film prepared by drying the paint on the reason same as above.

(D) Silane coupling agent

Examples of the silane coupling agent (D) are compounds having, in their molecule, a reactive group which contributes chemical reaction with organic materials and from 1 to 3 alkoxysilyl groups as a reactive group which contributes chemical bonding with inorganic materials. Examples of the reactive group, which contributes chemical bonding with organic materials, are epoxy, amino, mercapto, unsaturated, cation and halogen groups.

Conventionally known silane coupling agents are used as the silane coupling agent (D). Examples thereof are those described in JP-A-H8(1996)-127734 filed by the present inventors and specific examples are those having affinity (application properties) with epoxy resins such as β-(3,4-epoxycyclohexyl)ethyltrimethoxy silane, γ-glycidoxypropyltrimethoxy silane, γ-glycidoxypropylmethyldiethoxy silane, N-β(aminoethyl)γ-aminopropyltrimethoxy silane, N-β(aminoethyl)γ-aminopropylmethyldimethoxy silane, γ-aminopropyltriethoxy silane, N-phenyl-γ-aminopropyltrimethoxy silane and γ-chloropropyltrimethoxy silane. These silane coupling agents may be used singly or combined to use.

These silane coupling agents (D) are contained in an amount of usually from 0.1 wt% to 3 wt%, preferably from 1 wt% to 3 wt% specifically from 1 wt% to 2 wt% based on 100 wt% of the total of the solid content in the paint containing a solvent from the viewpoints of adhesion with steel plate bases and adhesion with mastics.

The silane coupling agents (D) are contained in an amount of usually from 0.1 wt% to 3 wt%, preferably from 1 wt% to 3 wt%, specifically from 1 wt% to 2 wt% in the dried coating film prepared by drying the paint from the reason same as above.

(E) Moisture absorbent

Conventionally known moisture absorbents can be used as the moisture absorbent (E) . For example, it is possible to use organic or inorganic dehydrating agents as described in paragraphs [0093] to [0095] in JP-A-2002-97407 filed by the present inventors. Furthermore, it is preferred to use inorganic dehydrating agents (also referred to inorganic dehydrating agents or inorganic moisture absorbents) in regard to storage stability of the paint, specifically prevention of hydrogen gas generation caused by reaction between moisture and zinc powder in the paint. As described above, the use of the paints blended with the dehydrating agent, particularly the inorganic dehydrating agent can improve storage stability.

Examples of the moisture absorbents (dehydrating agents) are anhydrite ($CaSO_4$) synthetic zeolite absorbents (Trade Name: Molecular sieve and the like), ortho-esters such as methyl orthoformate, methyl orthoacetate, ethyl orthoformate or orthoborate; silicates; isocyanates (Trade Name: Additive T1); tetraethoxy silane (Trade Name: Ethyl Silicate 28, manufactured by COLCOAT CO., LTD) and hydrolysis initial condensates of tetraethyl silicates (Trade Name: Ethyl Silicate 40, manufactured by COLCOAT CO., LTD, represented by the formula $(C_2H_5O)_3Si-\{O-Si(-OC_2H_5)_2\}_n-OC_2H_5$, wherein n(average)=5. Particularly, it is preferred to use synthetic zeolite (molecular sieve) as the component (E). These moisture absorbents may be used singly or in combination. For example, ethyl orthoformate and synthetic zeolite may be used in combination.

The moisture absorbent (E), particularly an inorganic moisture absorbent (an inorganic dehydrating agent) is contained in an amount of usually from 0.1 wt% to 3 wt%, preferably from 0.5 wt% to 2 wt% based on 100 wt% of the total of the solid content contained in the above paint (including a solvent).

Furthermore, the moisture absorbent (E) is in an amount of usually from 0.1 wt% to 3 wt%, preferably from 0.3 wt% to 2 wt% in a dried coating film.

When the paint or the dried coating film each contains the moisture absorbent (particularly an inorganic dehydrating agent) in the above amounts, the paint storage stability is improved.

Other components

- Pigments

In addition to the essential components, the rust preventive pigment-containing polyfunctional epoxy resin paint composition (the paint) may optionally contain pigments, solvents and other additives such as dispersing agents, thickners, anti-sagging agents, anti-settling agents and anti-segregating agents in regard to paint properties, working properties for coating and coating film appearance properties such as hue.

The pigments used herein are not limited particularly, and it is possible to use those widely used in usual paint compositions.

Examples of the pigments are extender pigments such as calcium carbonate, clay, talc, silica, mica, precipitated barium, potassium feldspar, albite, zirconium silicate and zinc oxide; and coloring pigments such as titanium oxide, red iron oxide, iron oxide, carbon black, phthalocyanine green and phthalocyanine blue. The pigments may be used singly or in combination.

The pigments are contained in an amount of usually from 1 wt% to 10 wt%, preferably from 3 wt% to 6 wt% in the dried coating film formed by the paint. When the amount of the pigments in the dried coating film is over 10 wt%, the rust prevention properties are likely lowered because the proportion of zinc in the coating film is decreased.

- Solvents

The solvents are not particularly limited and can be selected from those capable of solving the epoxy resin (A). For example, the solvents can be appropriately selected in accordance with various conditions such as working properties for coating in a shot line, working properties for coating after primary rust preventive treated steel materials are assembled to make into a block with welding.

Examples of the solvents are alcohol solvents such as methanol, ethanol, isopropyl alcohol and butanol; aromatic hydrocarbon solvents such as toluene and xylene; ketone solvents such as methyl ethyl ketone and methyl isobutyl ketone; and ester solvents such as ethyl acetate and butyl acetate. The solvents can be used singly or in combination in accordance with weather conditions at the time of coating.

The amount of the solvents in the paint composition is not particularly limited and the solvents are used in an appropriate amount in accordance with various purposes such as working properties for coating in a shot line, working properties for coating after making the materials into a block.

- Other additives

The other additives are not particularly limited and it is possible to use paint additives usually used such as dispersing agents, thickners, anti-sagging agents, anti-settling agents or anti-segregating agents.

Non-limitative examples of the anti-settling agents are polyethylene wax type thixotropic agents such as "DISPARLON 4200-20X" manufactured by KUSUMOTO CHEMICALS, Ltd., and the like.

Process for Preparation of the Paint

As the process for preparation of the rust preventive pigment-containing polyfunctional epoxy resin paint composition (the paint) according to the present invention, conventionally processes for applying anticorrosive paints can be utilized as they are or they are appropriately combined to use without employing a special process.

In the preferred embodiment of the invention, for example, the main component containing the polyfunctional epoxy resin (A) and the curing agent component containing the modified aliphatic polyamine (B) as a curing agent, are separately prepared and put in separate vessels for storage or keeping. Just before coating, the main component and the curing agent component are mixed and used as the paint of the present invention.

The main component is prepared in the following process. For example, the resin vehicle component, i.e. an epoxy resin varnish obtainable by dissolving the polyfunctional epoxy resin (A) and optionally other epoxy resins in a solvent is mixed with the above components including the silane coupling agent (D), the moisture absorbent (E), the pigments and the additives, to prepare a mixture and the solvent is appropriately added to the mixture. The mixture is dispersed using a dispersing machine such as basket mill or SG mill. Thereafter, the rust preventive pigment (C) is added to the mixture and dispersed by a dispersing machine, such as high-speed disperser.

In the preparation of the epoxy resin vanish obtainable by dissolving the epoxy resin (A) and optionally the other epoxy resins in a solvent, it is possible to employ a process for blending and dissolving the resin vehicle components in the solvent while stirring the components with a dispersing machine such as high-speed disperser.

An example of the curing agent component may include a solution (aliphatic polyamine solution) obtainable by dissolving the modified aliphatic polyamine (B) in a solvent. It is unnecessary to employ a special process as the process for preparing the curing agent component. It is possible to employ a usual process for preparing anticorrosive paints or a usual using process for the aliphatic polyamine solution to be blended.

In the rust preventive pigment-containing polyfunctional epoxy resin paint composition (the paint) according to the present invention, the pigment has a dispersing degree determined by a distribution method of preferably from 5 $\mu$m to 50 $\mu$m.

The viscosity of the rust preventive pigment-containing polyfunctional epoxy resin paint composition is regulated using a solvent in accordance with the coating processes. In the coating application using an airless coating machine, it is suitable to regulate the coating solution viscosity with Ford cup #4 for from 10 sec to 20 sec. The main component only has a viscosity namely a KU value determined by a Stormer viscometer of preferably from 49 to 109, more preferably from 57 to 88.

Coating Process

The process for coating a substrate with the rust preventive pigment-containing polyfunctional epoxy resin paint composition is not particularly limited and, for example, the paint composition can be applied on a substrate using an airless coating machine, an air spray coating machine or coating tools such as brushes or rollers by a conventionally known coating process.

The film coated with the rust preventive pigment-containing polyfunctional epoxy resin paint composition preferably has a dried thickness of at least 10 $\mu$m. When the dried thickness is less than 10 $\mu$m, the rust prevention properties are sometimes insufficient.

When the dried thickness is too thick, the consumption of the paint is increased uneconomically. Furthermore, the dryness of the film is inferior disadvantageously. The dried film more preferably has a thickness of about from 15 $\mu$m to 35 $\mu$m.

In the rust preventive pigment-containing polyfunctional epoxy resin paint composition (the paint) of the invention, the modified aliphatic polyamine (B) functions as a curing agent for the polyfunctional epoxy resin (A) and the other epoxy resins optionally added. Therefore, after the paint is applied, it can be cured at ordinary temperatures. Furthermore, the curing may be advanced by previously heating a substrate before coating or by heating a substrate after coating.

In the case of coating the both surfaces of a substrate with the rust preventive pigment-containing polyfunctional epoxy resin paint composition, particularly in a shot line, by the above coating process, it is preferred to load a coated substrate in the following way taking into account the case that curing properties of a coating film formed on the substrate are insufficient.

When the rust preventive pigment-containing polyfunctional epoxy resin paint is applied on the both surfaces of a substrate, it is preferred to load substrates by inserting boards (squared timbers) coated with a polyethylene sheet between the substrates. The coated substrates between which the boards are inserted are allowed to stand over one day and night. Thereafter, the substrates with the boards, as they are, are lifted by a lifting magnet, which is an apparatus for adsorbing, carrying and loading a steel thing with magnetism, and loaded to another place. Resultingly, the loading can be carried out without adhesion of the coated substrates.

When a reinforcing material is fixed on the surface of a substrate with welding, an inorganic zinc shop primer is coated on the substrate surface on which the reinforcing material is fixed with welding (usually, the upper surface of a substrate in coating a substrate in a shot line) and thereby adhesion between the coated substrates can be prevented without inserting polyethylene sheet-covered boards (squared timbers) between the coated substrates. As a result, the coated substrates can be directly loaded (piled up).

When the substrates coated in the above coating process have wrong conditions such as occurrence of rust in their coating films caused by exposure outdoors for a long period of time, cutting processing, welding processing or mechanical damage, their coating films are slightly secondary surface preparation with a power tool and the substrates are coated with the rust preventive pigment-containing polyfunctional epoxy resin paint using an airless coating machine, an air spray coating machine or coating tools such as brushes or rollers.

After the secondary surface preparation, the rust preventive pigment-containing polyfunctional epoxy resin composition (the paint) of the present invention, is applied to form a rust preventive pigment-containing coating film on the surface of the substrate. As a result, even if a mastic (resin rope), which bonds between a hull body and a heat shielding layer, is bonded, it is possible to attain high adhesion strength as the case where a mastic is adhered on a substrate coated with the paint of the present invention in a shot line. Moreover, a usual organic resin type anticorrosive paint can be applied on the coating film of the rust preventive pigment-containing polyfunctional epoxy resin composition.

The rust preventive pigment-containing polyfunctional epoxy resin paint composition of the invention can prepare coating films having anticorrosive properties, good adhesion with a mastic (resin rope) bonding a hull body and a heat shielding layer and high adhesion strength in the field in need of having anticorrosion properties, such as ships, bridges, plants or other steel constructions, particularly in the field in need of having high adhesion strength such as bonding a hull body and a heat shielding layer of an LNG carrier. The present invention, further, provides a coating process using the rust preventive pigment-containing polyfunctional epoxy resin paint composition, coated products obtainable by the coating process and a process for loading the coated products.

The above-described high adhesion strength is officially identified by GAZTRANSPORT & TECHNIGAS SAs in France.

The identification test items relating to high adhesion strength, which are tested in this institution, are the following from (1) to (4).

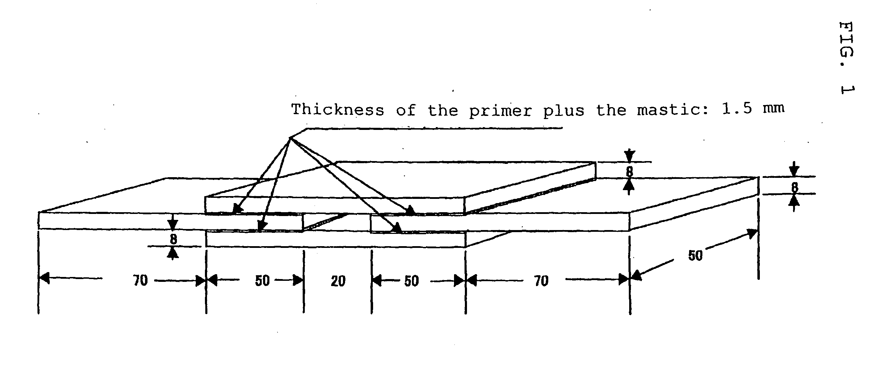

(1) Shearing tensile test using a specimen having a shape as shown in FIG. 1 at atmospheric temperatures of +20°C and -25°C.

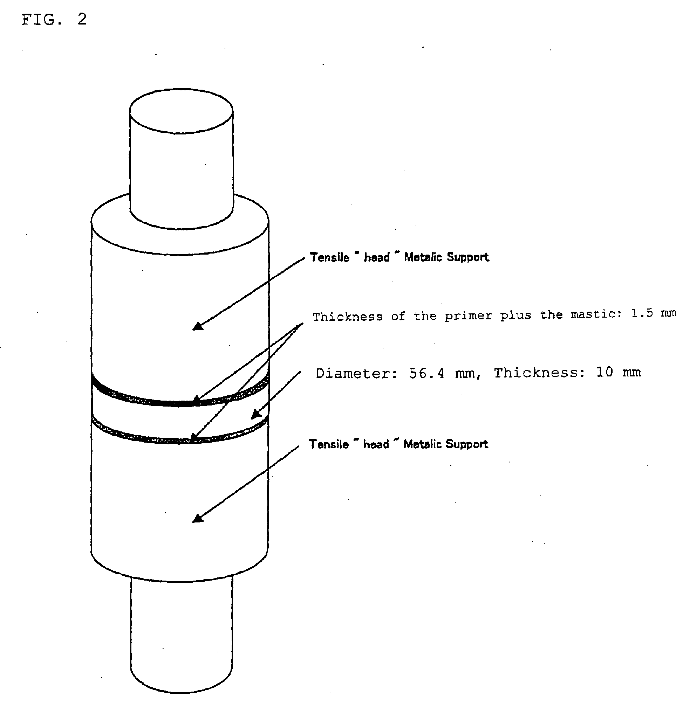

(2) Vertical tensile test using a specimen having a shape as shown in FIG. 2 at atmospheric temperatures of +20°C and -25°C.

(3) Shearing tensile test at atmospheric temperatures of +20°C and -25°C using specimens having been immersed in a 3% salt water for 2 weeks, 4 weeks and 6 weeks in the same test method as the test (1).

(4) Vertical tensile test at atmospheric temperatures of +20°C and -25°C using specimens having been immersed in a 3% salt water for 2 weeks, 4 weeks and 6 weeks in the same test method as the test (2).

The specimens under test were subjected to these tests from (1) to (4). As a result, specimens having high adhesion strength are required to have an adhesion strength in the shear tensile test of not less than 12 MPa, an adhesion strength in the vertical tensile test of not less than 10 MPa and an adhesion strength in each of the tensile tests after immersing in a 3% salt water for 2 weeks, 4 weeks and 6 weeks of at least 80% as high as the initial value thereof.

The use of the rust preventive pigment-containing polyfunctional epoxy resin paint composition according to the present invention can satisfy the high adhesion strength defined by the institute described above. Therefore, when the coating film formed from the paint composition is formed between a hull body, which is a substrate for coating, and a mastic (resin rope) and bonded, the hull body and the mastic can be firmly bonded.

EXAMPLE

The present invention will be further described with reference to the following examples, but it should not be limited by the examples.

Materials and Test conditions

- EPIKOTE #545: manufactured by JAPAN EPOXY RESINS Co., Ltd having an epoxy equivalent of from 770 to 870, a number average molecular weight (typical value) of 5700, a solid content of 100 wt% and a solvent content of 0 wt%.
- EPIKOTE #1001: manufactured by JAPAN EPOXY RESINS Co., Ltd having an epoxy equivalent of from 450 to 500, a number average molecular weight (typical value) of 900, a solid content of 100 wt% and a solvent content of 0 wt%.
- EPIKOTE #1007: manufactured by JAPAN EPOXY RESINS Co., Ltd having an epoxy equivalent of from 1750 to 2200, a number average molecular weight (typical value) of 2900, a solid content of 100 wt% and a solvent content of 0 wt%.
- Red iron oxide 530R: manufactured by TODA KOGYO CORP., Color pigment, red iron oxide.
- DISPARLON 4200-20: manufactured by KUSUMOTO CHEMICALS Ltd., anti-settling agent, polyethylene oxide wax, which is a pasty material having a solid content of 20 wt% and a solvent (xylene) content of 80 wt%.
- KBM 403: manufactured by Shin-Etsu Chemical Co., Ltd, silane coupling agent having a solid content of 100 wt% and a solvent content of 0 wt%.
- ZEOLUM A-4: manufactured by TOSOH CORPORATION, moisture absorbing agent having a solid content of 100 wt% and a solvent of 0 wt%.
- Zinc powder F2000: manufactured by THE HONJO CHEMICAL CORPORATION, average particle diameter of 4 $\mu$m.
- LF BOWSEI CP-Z: manufactured by KIKUCHI COLOR & CHEMICALS CORPORATION, zinc phosphate compound.
- K WHITE #84: manufactured by TAYCA CORPORATION, aluminum tripolyphosphate compound.
- PROTEX YM-92NS: manufactured by TAIHEI CHEMICAL INDUSTRIAL Co., Ltd. zinc phosphite compound.
- LUCKAMIDE TD-961: manufactured by DAINIPPON INK AND CHEMICALS,INCORPORATED, modified aliphatic polyamine having an active hydrogen equivalent (typical value) of 356, a solid content of 50 wt% and a solvent content of 50 wt%.

Example 1

In EXAMPLE 1, 17 parts by weight of EPIKOTE #545(a polyfunctional solid epoxy resin manufactured by JAPAN EPOXY RESINS Co., Ltd which has an epoxy equivalent of from 770 to 870 and a number average molecular weight (typical value) of 5700) was dissolved in 7 parts by weight of xylene, 6 parts by weight of methylethyl ketone and 5.5 parts by weight of isopropyl alcohol to prepare a varnish.

To the varnish, 2.5 parts by weight of Red Iron Oxide 530R (manufactured by TODA KOGYO CORP.) as a pigment, 1.5 parts by weight of DISPARLON 4200-20 (manufactured by KUSUMOTO CHEMICALS Ltd.) as an anti-settling agent, 1.0 part by weight of KBM403 (manufactured by Shin-Etsu Chemical Co., Ltd) as a silane coupling agent and 0.5 part by weight of ZEOLUM A-4 (manufactured by TOSOH CORPORATION) as a moisture absorbent were added and these components were mixed with stirring by means of a high speed rotation mixer (high speed disperser, T. K. HOMO DISPER manufactured by PRIMIX CORPORATION) and further a solid content contained in the mixture was finely dispersed using a paint dispersing machine (a small sized basket mill manufactured by ASADA IRON WORKS CO., LTD). Thereafter, 34.0 parts by weight of Zinc powder F2000 (having an average particle diameter of 4 $\mu$m, manufactured by THE HONJO CHEMICAL CORPORATION) was added to the resulting dispersion and uniformly mixed using the high speed rotation mixer (high speed disperser, T. K. HOMO DISPER manufactured by PRIMIX CORPORATION) to prepare a main component (main component unit).

20.0 parts by weight of LUCKAMIDE TD-961 (manufactured by DAINIPPON INK AND CHEMICALS, INCORPORATED, modified aliphatic polyamine, prepared by addition reaction of a bisphenol A type solid epoxy resin (EPIKOTE #1001 type) to 99% ethylene diamine to form an adduct and diluting it with xylene and N-butanol) was added to a solvent and uniformly dispersed by the high speed rotation mixer to prepare a curing agent (curing agent unit).

The main component and the curing agent thus prepared (the combination of the both components was sometimes referred to a paint set) were mixed to prepare a paint composition in EXAMPLE 1.

In the paint composition, the reaction ratio of epoxy to amine was 0.74. The reaction ration was determined in the following formula:

(Solid content in the polyfunctional epoxy resin X Equivalent of Active hydrogen in the modified aliphatic polyamine) / (Solid content in the modified aliphatic polyamine X Epoxy equivalent of the polyfunctional epoxy resin) = (17X35)/(10X820)=0.74. The dried coating film formed by the paint composition had an epoxy resin content of 26.0 (% by weight), a zinc powder content of 52.1 (% by weight), a pigment content 3.8 (% by weight), a silane coupling agent content of 1.5 (% by weight) and a moisture absorbent content of 0.8 (% by weight).

The results are shown in TABLE 1. The mount of each component was measured in the following formula:

```
(the amount of solid content in each component blended in the

paint) / (the total amount of solid content in the paint).   An
```

An epoxy resin contained in the curing agent unit such as bisphenol A type solid epoxy resin for preparation of the modified aliphatic polyamine was not counted as the amount of the epoxy resin.

Reference Examples 2 and 3 and Examples 4 to 8

In each example, the procedure of EXAMPLE 1 was repeated except that the blending components were changed as shown in TABLE 1 to prepare a main component and a curing agent component. These components were mixed in the same manner as in EXAMPLE 1 to prepare a paint composition.

In the resulting paint compositions and a dried coating films formed by the paint compositions, the amount (%) of each component was measured in the same manner as in EXAMPLE 1.

The results are shown in TABLE 1.

Comparative Example 1 and 2

In each example, the procedure of EXAMPLE 1 was repeated except that the blending components were changed as shown in TABLE 1 to prepare a main component and a curing agent component. These components were mixed in the same manner as in EXAMPLE 1 to prepare a paint composition.

In the resulting paint compositions and a dried coating films formed by the paint compositions, the amount (%) of each component was measured in the same manner as in EXAMPLE 1.

The results are shown in TABLE 1.

Evaluation on Coating film properties

The coating films prepared in Examples and Comparative Examples were evaluated by the following test methods.

The results are shown in TABLE 2.

<Low temperature curing properties>

Each of the paints prepared in Examples and Comparative Examples was applied on a cold rolling steel plate (JIS G3141) (SPCC-SB, 150mm x 70mm x 0.8mm) inside at a room temperature of 5°C in an amount that the dried coating film had a thickness of 30 $\mu$m, and then the "set to touch" time and "dry to touch" time were evaluated.

<Adhesion properties (Cross-cut method)>

Each of the paints prepared in Examples and Comparative Examples was applied on a steel plate for construction (JIS G3101) (SS400 150mm x 70mm x 6mm) processed with sandblasting in an amount that the dried coating film had a thickness of 30 μm, and dried inside at a constant temperature of 23°C and a constant relative humidity of 50 % for 7 days. Thereafter, 25 parallel crosscuts having a width of 4 mm were made on the steel plate, and the steel plate was subjected to a Cross-cut test with Cello tape (R) to evaluate the initial adhesion properties of the coating film.

<Adhesion properties (Pull-off method)>

A test plate was prepared in the same manner as in the test on adhesion properties (Cross-cut test) and a jig having a contact area of 1 cm$^2$ was bonded on the plate using a mastick (manufactured by HUNTSMAN/VANTICO Co., mixing weight ratio of a main component (XF536M-1) to a curing agent (XF537-1) is 100: 80), and cured inside at a constant temperature of 23°C and a constant relative humidity of 50 % for 7 days. Thereafter, the adhesion strength of the coating film was evaluated using a tensile tester manufactured by MOTOFUJI Co., Ltd.

<Corrosion resistance (Weathering evaluation test)>

Each of the paints prepared in Examples and Comparative Examples was applied on a steel plate for construction (JIS G3101) (SS400, 150mm x 70mm x 2.3mm) processed with sand blasting in an amount that the dried coating film had a thickness of 30 μm, and dried inside at a constant temperature of 23°C and a constant relative humidity of 50% for 7 days. Thereafter, the steel plate was set in a weathering test stand put toward the south with inclination angle 45° southward provided in Otake Technical Center, CHUGOKU MARINE PAINTS Ltd., and allowed to stand for 12 months. Then, the coating film condition (occurrence of rust) was evaluated in accordance with the criteria of D-160 determined by ASTM (American Society for Testing and Materials).

<Corrosion resistance (water exposure weathering properties)>

Each of the paints prepared in Examples and Comparative Examples was applied on a steel plate for construction (JIS G3101) (SS400, 150mm x 70mm x 2.3mm) processed with sand blasting in an amount that the dried coating film had a thickness of 30 μm, and dried inside at a constant temperature of 23°C and a constant relative humidity of 50 % for 7 days. Thereafter, the steel plate was horizontally set in an exposure test place provided in Otake Technical Center, CHUGOKU MARINE PAINTS Ltd. , and spraying with water on the steel plate was continued for 3 months. Then, the coating film condition (occurrence of rust) was evaluated in accordance with the criteria of D-160 determined by ASTM (American Society for Testing and Materials).

<Corrosion resistance (exposure resistance to spray with neutral brine)>

Each of the paints prepared in Examples and Comparative Examples was applied on a steel plate for construction (JIS G3101) (SS400 150mm x 70mm x 2. 3mm) processed with sand blasting in an amount that the dried coating film had a thickness of 30 μm, and dried inside at a constant temperature of 23°C and a constant relative humidity of 50 % for 7 days. Thereafter, a salt water (concentration 5%) was sprayed on the test steel plate in a SALT SPRAY CASS TEST INSTRUMENT at a temperature of 35°C ± 2°C for 100 hours. Then, the coating film condition (occurrence of rust) was evaluated in accordance with the criteria of D-160 determined by ASTM (American Society for Testing and Materials).

<Corrosion resistance (moisture resistance, continuous dew condensation method)>

Each of the paints prepared in Examples and Comparative Examples was applied on a steel plate for construction (JIS G3101) (SS400, 150mm x 70mm x 2.3mm) processed with sand blasting in an amount that the dry film thickness was 30 μm, and dried inside at a constant temperature of 23°C and a constant relative humidity of 50 % for 7 days. Thereafter, the test steel plate was hanged in a moisture resistance test apparatus at a HUMIDITY CABINET temperature of 50°C ± 1°C at a relative humidity of at least 95 % for 500 hours. Then, the coating film condition (occurrence of rust) was evaluated in accordance with the criteria of D-160 determined by ASTM (American Society for Testing and Materials).

<Corrosion resistance (resistance to immersion in salt water) >

Each of the paints prepared in Examples and Comparative Examples was applied on a steel plate for construction (JIS G3101) (SS400, 150mm x 70mm x 2.3mm) processed with sand blasting in an amount that the dried coating film had a thickness of 30 μm, and dried inside at a constant temperature of 23°C and a constant relative humidity of 50 % for 7 days. Thereafter, the test steel plate was immersed in a vessel charged with a 3% salt water at 23°C and kept for 3 months. Then, the coating film condition (occurrence of rust) was evaluated in accordance with the criteria of D-160 determined by ASTM (American Society for Testing and Materials).

<Tensile test (test method determined by GAZTRANSPORT & TECHNIGAZ SAs)>

Each of the paints prepared in Examples and Comparative Examples was applied on a steel plate for construction (JIS G3101) (SS400, 150mm x 70mm x 6mm) processed with shot blasting in an amount that the dry film thickness was 30 $\mu$m, and dried inside at a constant temperature of 23 ° C and a constant relative humidity of 50 % for 7 days. Thereafter, the steel plate was bonded using the mastic manufactured by HUNTSMAN/VANTICO Co., to form a specimen defined by the test method determined by GAZTRANSPORT & TECHNIGAZ SAs and the specimen was cured inside at a constant temperature of 23°C at a constant relative humidity of 50% for 7 days. Then, the specimen was subjected to a shear tensile test and vertical tensile test, and further after immersion in a vessel charged with a 3% salt water at 23°C for 6 weeks, the specimen was subjected to a shear tensile test and a vertical tensile test. The adhesion strength of the coating film was evaluated.

<Suitability for Shot line>

Using a shot line in a dockyard, the paints prepared in Examples from 1 to 8 were evaluated on suitability in a shot line, 1) drying properties of coating film, 2) coating film adhesion on a roller or not and 3) stacking properties of steel plates, as shown in TABLE 3.

The results are shown in TABLE 3.

The shot line was designed and constructed by SINTOKOGIO, Ltd. and had a conveyer speed of 5 mm/min and airless nozzle chips of GRACO 921. The coating was carried out back and forth with 2 nozzle chips up and down at an airless primary pressure of 3 kg/cm$^2$.

1) Drying properties of a coating film was evaluated with "set to touch" time and "dry to touch" time.

2) Coating film adhesion on a roller or not was evaluated by adhesion conditions of a coating film on a roller for conveying a steel plate.

3) Stacking properties of steel plates were evaluated in the following test method. Each steel plate obtained after coating was conveyed on a roller and then steel plates were directly stacked up by a lifting magnet and allowed to stand for 1 day. Thereafter, the steel plates were hanged by a lifting magnet and thereby it was evaluated whether each of the steel plates could be easily hanged up or not, and whether each coating film was damaged or not in the following criteria.

-    Evaluation standards for steel plate stacking properties

    AA: Good without any problems
    BB: Good without practical problems
    CC: there were somewhat problems
    DD: there were practical problems

On the upper surface of a steel plate, an inorganic zinc shop primer (CERABOND 2000, manufactured by CHUGOKU MARINE PAINTS Ltd.) was applied.

As is clear from the test results as shown in TABLE 2 (various corrosion resistances determined by weathering evaluation test, water exposure weathering test, test for exposure resistance to salt water, moisture resistant test and test for resistance to immersion in salt water, and retention of adhesion strength evaluated by the tensile tests on the test plates after immersing in the salt water), coating films having excellent corrosion resistance and adhesion strength can be prepared using the paint compositions satisfying various conditions defined in the present invention.

The results, further, show that if the epoxy equivalent, number average molecular weight and number (theoretical value) of epoxy groups of the epoxy resin in the main component are in the ranges defined in the first and second embodiments of the present invention, coating films having good drying properties and adhesion strength can be obtained using the modified aliphatic polyamine as a curing agent.

<Recoating properties of Coating film>

Each of the paints prepared in Examples and Comparative Examples was applied on a steel plate for construction (JIS G3101) (SS400, 150mm x 70mm x 6mm) processed with sand blast in an amount that the dry film thickness was 30 $\mu$m, and dried inside at a constant temperature of 23°C and a constant relative humidity of 50 % for 7 days. Thereafter, the steel plate was set in an exposure test stand put toward the south with inclination angle 45°C provided outside in Otake Technical Center, CHUGOKU MARINE PAINTS Ltd., and allowed to stand for 12 months. After the exposure, each steel plate was re-coated with the same paint prepared in Examples and Comparative Examples respectively, and then was evaluated on adhesion properties by the cross cut method and the pull off method.

EXAMPLES from 1 to 8 and COMPARATIVE EXAMPLES from 1 to 8 were studied by comparison. As is clear from TABLE 4, when the surface of the dried coating film coated with the paint for forming the coating film was recoated with the same paint to form a coating film, the resulting coating film had good adhesion properties almost same as the initial adhesion properties although the adhesion strength of the coating film was found to have dispersion and little degradation.

Table 1-1

| Blending component (part by weight) | | Example | | | | |
|---|---|---|---|---|---|---|
| | | 1 | 2* | 3* | 4 | 5 |
| Main components | | | | | | |
| Solvent | Xylene | 7 | 6 | 7 | 7 | 9 |
| | Methylethylketone | 6 | 5 | 7 | 7 | 9 |
| | Isopropylalcohol | 5.5 | 4.5 | 5.5 | 5.5 | 5 |
| Epoxy resin | EPIKOTE #545 (solid content 100 wt%) | 17 | 0 | 0 | 24 | 25.5 |
| | EPIKOTE #1001 (solid content 100 wt%) | 0 | 15 | 0 | 0 | 0 |
| | EPIKOTE #1007 (solid content 100 wt%) | 0 | 0 | 24 | 0 | 0 |
| Color pigment | Red Iron Oxide 530R (solid content 100 wt%) | 2.5 | 2.5 | 2.5 | 2.5 | 2.5 |
| Anti-settling actent | DISPARLON 4200-20 (solid content 20 wt%) | 1.5 | 1.5 | 1.5 | 1.5 | 1.5 |
| Silane coupling agent | KBM403 (solid content 100 wt%) | 1 | 1 | 1 | 1 | 1 |
| Moisture absorbent | ZEOLUM A-4 (solid content 100 wt%) | 0.5 | 0.5 | 0.5 | 0.5 | 0.5 |
| Rust Preventive pigment | Zinc powder F2000 (solid content 100 wt%) | 34 | 34 | 36 | 36 | 26 |
| | LF BOWSEI CP-Z (solid content 100 wt%) | 0 | 0 | 0 | 0 | 0 |
| | K WHITE #84 (solid content 100 wt%) | 0 | 0 | 0 | 0 | 0 |
| | PROTEX YM-92NS (solid content 100 wt%) | 0 | 0 | 0 | 0 | 0 |
| Extender pigment | Silica (solid content 100 wt%) | 0 | 0 | 0 | 0 | 0 |
| Subtotal (wt part) | | 75 | 70 | 85 | 85 | 80 |
| Subtotal of Solid contents | | 55.3 | 53.3 | 69.3 | 64.3 | 55.8 |
| Curing agent component | | | | | | |
| Solvent | Xylene | 2 | 1 | 1 | 0 | 0 |
| | Methylethyl ketone | 2 | 1 | 1 | 0 | 0 |
| | Isopropyl alcohol | 1 | 0 | 1 | 0 | 0 |
| Modified aliphatic polyamine | LUCKAMIDE TD961 (solid component 50 wt%) | 20 | 28 | 12 | 15 | 20 |

(continued)

| Blending component (part by weight) | | Example | | | | |
|---|---|---|---|---|---|---|
| | | 1 | 2* | 3* | 4 | 5 |
| Subtotal (wt part) | | 25 | 30 | 15 | 15 | 20 |
| Subtotal of Solid contents | | 10 | 14 | 6 | 7.5 | 10 |
| Total (wt part) | | 100 | 100 | 100 | 100 | 100 |
| non-volatile components (wt%) | | 65.3 | 67.3 | 70.3 | 71.8 | 65.8 |
| Reaction ratio epoxy/amine | | 0.74 | 0.80 | 0.72 | 0.69 | 1.11 |
| Each weight in a dried coating film (wt%) determined from the solid content in a paint | epoxy resin cured product | 26.0 | 22.3 | 34.1 | 33.4 | 38.8 |
| | rust preventive pigment (zinc powder) | 52.1 | 50.5 | 51.2 | 50.1 | 39.5 |
| | rust preventive pigment other than zinc powder | 0 | 0 | 0 | 0 | 0 |
| | color pigment | 3.8 | 3.7 | 3.6 | 3.5 | 3.8 |
| | extender pigment | 0 | 0 | 0 | 0 | 0 |
| | silane coupling agent | 1.5 | 1.5 | 1.4 | 1.4 | 1.5 |
| | moisture absorber | 0.8 | 0.7 | 0.7 | 0.7 | 0.8 |
| | modified aliphatic polyamine | 15.3 | 20.8 | 8.5 | 10.4 | 15.2 |
| Paint solution viscosity (Ford cup #4, sec) | | 14 | 15 | 16 | 18 | 17 |
| * Reference Example | | | | | | |

Table 1-2

| Blending component (part by weight) | | Example | | | Comparative Example | |
|---|---|---|---|---|---|---|
| | | 6 | 7 | 8 | 1 | 2 |
| Main components | | | | | | |
| Solvent | Xylene | 16 | 16 | 16 | 11 | 11 |
| | Methylethylketone | 8 | 8 | 8 | 11 | 11 |
| | Isopropylalcohol | 8.5 | 8.5 | 8.5 | 10.5 | 10.5 |
| Epoxy resin | EPIKOTE #545 (solid content 100 wt%) | 17 | 17 | 17 | 17 | 17 |
| | EPIKOTE #1001 (solid content 100 wt%) | 0 | 0 | 0 | 0 | 0 |
| | EPIKOTE #1007 (solid content 100 wt%) | 0 | 0 | 0 | 0 | 0 |
| Color pigment | Red iron oxide 530R(solid content 100 wt%) | 2.5 | 2.5 | 2.5 | 2.5 | 3.5 |
| Anti-settlin g agent | DISPARLON 4200-20 (solid content 20 wt%) | 1.5 | 1.5 | 1.5 | 1.5 | 1.5 |
| Silane coupling agent | KBM403 (solid content 100 wt%) | 1 | 1 | 1 | 1 | 0 |
| Moisture absorbent | ZEOLUM A-4 (solid content 100 wt%) | 0.5 | 0.5 | 0.5 | 0.5 | 0.5 |

(continued)

| Blending component (part by weight) | | Example | | | Comparative Example | |
|---|---|---|---|---|---|---|
| | | 6 | 7 | 8 | 1 | 2 |
| Main components | | | | | | |
| Rust Presentive preventive pigment | Zinc powder F2000 (solid content 100 wt%) | 0 | 0 | 0 | 0 | 20 |
| | LF BOWSEI CP-Z (solid content 100 wt%) | 20 | 0 | 0 | 0 | 0 |
| | K WHITE #84 (solid content 100 wt%) | 0 | 20 | 0 | 0 | 0 |
| | PROTEX YM-92NS (solid content 100 wt%) | 0 | 0 | 20 | 0 | 0 |
| Extender pigment | Silica (solid content 100 wt%) | 0 | 0 | 0 | 20 | 0 |
| Subtotal (wt part) | | 75 | 75 | 75 | 75 | 75 |
| Subtotal of Solid contents | | 41.3 | 41.3 | 41.3 | 41.3 | 41.3 |
| Curing agent component | | | | | | |
| Solvent | Xylene | 2 | 2 | 2 | 2 | 2 |
| | Methylethyl ketone | 2 | 2 | 2 | 2 | 2 |
| | Isopropyl alcohol | 1 | 1 | 1 | 1 | 1 |
| Modified aliphatic polyamine | LUCKAMIDE TD961 (solid component 50 wt%) | 20 | 20 | 20 | 20 | 20 |
| Subtotal (wt part) | | 25 | 25 | 25 | 25 | 25 |
| Subtotal of Solid contents | | 10 | 10 | 10 | 10 | 10 |
| Total (wt part) | | 100 | 100 | 100 | 100 | 100 |
| non-volatile components (wt%) | | 51.3 | 51.3 | 51.3 | 51.3 | 51.3 |
| Reaction ratio epoxy/amine | | 0.74 | 0.74 | 0.74 | 0.74 | 0.74 |
| Each weight in a dried coating film (wt%) determined from the solid content in a paint | epoxy resin cured product | 33.1 | 33.1 | 33.1 | 33.1 | 33.1 |
| | rust preventive pigment (zinc powder) | 0 | 0 | 0 | 0 | 39.0 |
| | rust preventive pigment other than zinc powder | 39.0 | 39.0 | 39.0 | 0 | 0 |
| | color pigment | 4.9 | 4.9 | 4.9 | 4.9 | 6.8 |
| | extender pigment | 0 | 0 | 0 | 39.0 | 0 |
| | silane coupling agent | 1.9 | 1.9 | 1.9 | 1.9 | 0 |
| | moisture absorber | 1.0 | 1.0 | 1.0 | 1.0 | 0.8 |
| | modified aliphatic polyamine | 19.5 | 19.5 | 19.5 | 19.5 | 19.5 |
| Paint solution viscosity (Ford cup #4, sec) | | 13 | 13 | 13 | 11 | 18 |

Table 2-1

| Items in Measuring test | | Example | | | | |
|---|---|---|---|---|---|---|
| | | 1 | 2 * | 3* | 4 | 5 |
| Low temperature curing properties (5°C) | "Set to touch" time (min) | 8 | 12 | 10 | 8 | 9 |
| | "Dry to touch" time (min) | 15 | 20 | 18 | 15 | 16 |
| Cross-cut test (4 mm width) | | 25/25 | 25/25 | 25/25 | 25/25 | 25/25 |
| Vertical tensile test | Adhesion strength (kg/cm$^2$) | 210 | 195 | 200 | 210 | 210 |
| Weathering test (stand provided toward the south with inclination angle 45° for 12 months) | | 10 | 10 | 10 | 10 | 10 |
| Spraying with water (for 3 months) | | 10 | 10 | 10 | 10 | 10 |
| Salt spray test (35°C 5% salt water) 100 hours | Anticorrosive properties | 10 | 10 | 10 | 10 | 10 |
| | Cross-cut test | 25/25 | 25/25 | 25/25 | 25/25 | 25/25 |
| | Creep width (mm) | 0 | 0 | 0 | 0 | 0 |
| Resistance to humidity (50°C relative humidity 98%) 500 hr | Anticorrosive properties | 10 | 10 | 10 | 10 | 10 |
| | Cross-cut test | 25/25 | 25/25 | 25/25 | 25/25 | 25/25 |
| | Creep width (mm) | 0 | 0 | 0 | 0 | 0 |
| Salt water immersion test (23°C 3% brine) 3 months | Anticorrosive properties | 10 | 10 | 10 | 10 | 10 |
| | Cross-cut test | 25/25 | 25/25 | 25/25 | 25/25 | 25/25 |
| | Creep width (mm) | 0 | 0 | 0 | 0 | 0 |
| Shear tensile test | Adhesion strength (Mpa/+20°C) | 15 | 14 | 14 | 16 | 17 |
| | Adhesion strength (Mpa/-25°C) | 15 | 14 | 14 | 16 | 17 |
| Vertical tensile test | Adhesion strength (Mpa/+20°C) | 22 | 20 | 21 | 23 | 24 |
| | Adhesion strength (Mpa/-25°C) | 22 | 20 | 21 | 23 | 24 |
| Shear tensile test after immersion in brine for 6 weeks | Adhesion strength (Mpa/+20°C) | 15 | 14 | 14 | 16 | 17 |
| | Retention rate of Tensile strength (%) | 100 | 100 | 100 | 100 | 100 |
| Vertical tensile test after immersion in brine for 6 weeks | Adhesion strength (Mpa/+20°C) | 22 | 20 | 21 | 23 | 24 |
| | Retention rate of Tensile strength (%) | 100 | 100 | 100 | 100 | 100 |
| * Reference Example | | | | | | |

Table 2-2

| Items in Measuring test | | Example | | | Comparative Example | |
|---|---|---|---|---|---|---|
| | | 6 | 7 | 8 | 1 | 2 |
| Low temperature curing properties (5°C) | "Set to touch" time (min) | 8 | 8 | 8 | 8 | 8 |
| | "Dry to touch" time (min) | 15 | 15 | 15 | 15 | 15 |
| Cross-cut test (4 mm width) | | 25/25 | 25/25 | 25/25 | 25/25 | 23/25 |
| Vertical tensile test | Adhesion strength (kg/cm$^2$) | 205 | 205 | 205 | 100 | 80 |
| Weathering test (stand provided toward the south with inclination angle 45° for 12 months) | | 10 | 10 | 10 | 1 | 9 |
| Spraying with water (for 3 months) | | 10 | 10 | 10 | 0 | 8 |
| Salt spray test (35°C 5% salt water) 100 hours | Anticorrosive properties | 10 | 10 | 10 | 1 | 8 |
| | Cross-cut test | 25/25 | 25/25 | 25/25 | 25/25 | 17/25 |
| | Creep width (mn) | 0 | 0 | 0 | 10 | 3 |
| Resistance to humidity (50°C relative humidity 98%) 500 hr | Anticorrosive properties | 10 | 10 | 10 | 3 | 9 |
| | Cross-cut test | 25/25 | 25/25 | 25/25 | 15/25 | 20/25 |
| | Creep width (mm) | 0 | 0 | 0 | 5 | 1 |
| Salt water immersion test (23°C 3% brine) 3 months | Anticorrosive properties | 10 | 10 | 10 | 0 | 7 |
| | Cross-cut test | 25/25 | 25/25 | 25/25 | 0/25 | 12/25 |
| | Creep width (mm) | 0 | 0 | 0 | - | 4 |
| Shear tensile test | Adhesion strength (Mpa/+20°C) | 14 | 14 | 14 | 12 | 10 |
| | Adhesion strength (Mpa/-25°C) | 14 | 14 | 14 | 12 | 9 |
| Vertical tensile test | Adhesion strength (Mpa/+20°C) | 20 | 20 | 20 | 18 | 14 |
| | Adhesion strength (Mpa/-25°C) | 20 | 20 | 20 | 18 | 12 |
| Shear tensile test after immersion in brine for 6 weeks | Adhesion strength (Mpa/+20°C) | 14 | 14 | 14 | 3 | 6 |
| | Retention rate of Tensile strength (%) | 100 | 100 | 100 | 25.0 | 60 |
| Vertical tensile test after immersion in brine for 6 weeks | Adhesion strength (Mpa/+20°C) | 20 | 20 | 20 | 7 | 11 |
| | Retention rate of Tensile strength (%) | 100 | 100 | 100 | 38.9 | 78.6 |

Table 3

| | | Example | | | | | | | |
|---|---|---|---|---|---|---|---|---|---|
| | | 1 | 2* | 3* | 4 | 5 | 6 | 7 | 8 |
| Shot line applicabi lity | Drying properties of coating film | BB | BB | BB | BB | BB | BB | BB | BB |
| | Coating film adhesion of roller or not | BB | BB | BB | BB | BB | BB | BB | BB |

(continued)

| | Example | | | | | | | |
|---|---|---|---|---|---|---|---|---|
| | 1 | 2* | 3* | 4 | 5 | 6 | 7 | 8 |
| steel plate stacking properties | AA | AA | AA | AA | AA | AA | AA | AA |
| * Reference Example | | | | | | | | |

Table 4-1

| | | Example | | | | |
|---|---|---|---|---|---|---|
| | | 1 | 2 * | 3 * | 4 | 5 |
| Cross-cut test (4 mm width) | | 25/25 | 25/25 | 25/25 | 25/25 | 25/25 |
| Vertical tensile test | Adhesion strength (kg/cm$^2$) | 205 | 190 | 195 | 190 | 195 |
| * Reference Example | | | | | | |

Table 4-2

| | | Example | | | Comparative Example | |
|---|---|---|---|---|---|---|
| | | 6 | 7 | 8 | 1 | 2 |
| Cross-cut test (4 mm width) | | 25/25 | 25/25 | 25/25 | 25/25 | 25/25 |
| Vertical tensile test | Adhesion strength (kg/cm$^2$) | 210 | 210 | 200 | 100 | 80 |

[Effect of the Invention]

The present invention has the above formations. Therefore, coating films having good corrosion resistance and high adhesion strength at room temperature or even if at a very low temperature of -25°C or lower can be prepared.

Accordingly, the coating films can be suitably used in the field in need of corrosion resistance, for example, steel constructions including ships, bridges or plants, particularly in the field in need of high adhesion strength such as adhesion between a hull and a heat shielding layer in an LNG tank of a ship.

**Claims**

1.  A rust preventive pigment-containing polyfunctional epoxy resin paint composition comprising:

    (A) a polyfunctional epoxy resin,
    (B) a modified aliphatic polyamine,
    (C) a rust preventive pigment,
    (D) a silane coupling agent and
    (E) a moisture absorbent,

    wherein the polyfunctional epoxy resin (A) contains from 6 to 9 epoxy groups, as determined with a theoretical value calculated by dividing its number average molecular weight Mn (measured with GPC relative to polystyrene standards, referred to hereinafter) by epoxy equivalent.

2.  The rust preventive pigment-containing polyfunctional epoxy resin paint composition according to claim 1 wherein the polyfunctional epoxy resin (A) has a number average molecular weight of not less than 5000 and an epoxy equivalent of not less than 700.

3.  The rust preventive pigment-containing polyfunctional epoxy resin paint composition according to claim 1 or 2 wherein the polyfunctional epoxy resin (A) has a number average molecular weight of from 5500 to 9000 and an epoxy equivalent of from 750 to 1000.

4. The rust preventive pigment-containing polyfunctional epoxy resin paint composition according to any one of from claim 1 to claim 3 wherein the modified aliphatic polyamine (B) is prepared by submitting a bisphenol A type solid epoxy resin to addition reaction on ethylene diamine or its compound to form an adduct and diluting it with a solvent.

5. The rust preventive pigment-containing polyfunctional epoxy resin paint composition according to any one of from claim 1 to claim 4 wherein the rust preventive pigment (C) is at least one, or two or more compounds selected from the group consisting of zinc powder, zinc alloy powder, zinc phosphate compounds, calcium phosphate compounds, aluminum phosphate compounds, magnesium phosphate compounds, zinc phosphite compounds, calcium phosphite compounds, aluminum phosphite compounds, strontium phosphite compounds, aluminum tripolyphosphate compounds, molybdate compounds, zinc cyanamide compounds, borate compounds, nitro compounds and composite oxides.

6. The rust preventive pigment-containing polyfunctional epoxy resin paint composition according to any one of from claim 1 to claim 5 wherein the silane coupling agent (D) is at least one selected from the group consisting of
β-(3,4-epoxycyclohexyl)ethyltrimethoxy silane,
γ-glycidoxypropyltrimethoxy silane,
γ-glycidoxypropylmethyldiethoxy silane,
N-β(aminoethyl)γ-aminopropyltrimethoxy silane,
N-β(aminoethyl)γ-aminopropylmethyl dimethoxy silane,
γ-aminopropyl triethoxy silane, N-phenyl-γ-aminopropyl trimethoxy silane and γ-chloropropyl trimethoxy silane.

7. The rust preventive pigment-containing polyfunctional epoxy resin paint composition according to any one of from claim 1 to claim 6 wherein the moisture absorbent (E) is at least one, or two or more selected from the group consisting of synthetic zeolite, orthomethyl formate, orthoethyl formate, tetraethoxy silane (ethyl silicate 28) and hydrolysis initial condensates of tetraethyl silicates (ethyl silicate 40).

8. The rust preventive pigment-containing polyfunctional epoxy resin paint composition according to any one of from claim 1 to claim 7 which further comprises a pigment (F).

9. The rust preventive pigment-containing polyfunctional epoxy resin paint composition according to any one of from claim 1 to claim 8 wherein the pigment (F) is at least one selected from the group consisting of calcium carbonate, clay, talc, silica, mica, sedimentation barium, potassium feldspar, albite, zirconium silicate, zinc oxide, titanium oxide, red iron oxide, iron oxide, carbon black, phthalocyanine green and phthalocyanine blue.

10. The rust preventive pigment-containing polyfunctional epoxy resin paint composition according to any one of from claim 1 to claim 9 which further comprises an organic solvent (G) capable of solving epoxy resins.

11. The rust preventive pigment-containing polyfunctional epoxy resin paint composition according to any one of from claim 1 to claim 10, which furthermore comprises at least one paint additive selected from dispersants, thickners, anti-sagging agents, thixotropic agent, anti-settling agents and anti-color segregating agents.

12. The rust preventive pigment-containing polyfunctional epoxy resin paint composition according to any one of from claim 1 to claim 11, which comprises:

the polyfunctional epoxy resin (A) in an amount of from 5 wt% to 50 wt%,
the modified aliphatic polyamine (B) in an amount of from 5 wt% to 40 wt%,
the rust preventive pigment (C) in an amount of from 15 wt% to 70 wt%,
the silane coupling agent (D) in an amount of from 0.1 wt% to 3 wt%, and
the moisture absorbent (E) in an amount of from 0.1 wt% to 3 wt%, provided that the content of each of the components from (A) to (E) is a value converted to solid content and the total amount of the solid contents in the paint is 100 wt%, also referred to hereinafter.

13. The rust preventive pigment-containing polyfunctional epoxy resin paint composition according to any one of from claim 1 to claim 11, which comprises:

the polyfunctional epoxy resin (A) in an amount of from 10 wt% to 40 wt%,

the modified aliphatic polyamine (B) in an amount of from 5 wt% to 30 wt%,
the rust preventive pigment (C) in an amount of from 20 wt% to 60 wt%,
the silane coupling agent (D) in an amount of from 1 wt% to 3 wt%, and
the moisture absorbent (E) in an amount of from 0.3 wt% to 2 wt%, provided that the total amount of the solid contents in the paint is 100 wt%,

14. An anticorrosive coating film formed from the rust preventive pigment-containing polyfunctional epoxy resin paint compositions as claimed in any one of from claim 1 to claim 13.

15. A coating film-coated substrate obtained by coating a surface with an anticorrosive coating film formed from the rust preventive pigment-containing polyfunctional epoxy resin paint composition as claimed in any one of from claim 1 to claim 13.

16. A coating film-coated inner wall surface in a ship tank which surface is coated with an anticorrosive coating film formed from the rust preventive pigment-containing polyfunctional epoxy resin paint composition as claimed in any one of from claim 1 to claim 13.

17. A coating film-coated inner wall surface in an LNG carrier tank which surface is coated with an anticorrosive coating film formed from the rust preventive pigment-containing polyfunctional epoxy resin paint composition as claimed in any one of from claim 1 to claim 13.

18. A laminated structure obtainable by laminating an anticorrosive coating film layer, a mastic (resin rope) which binds the anticorrosive coating film layer and a heat shielding layer, and the heat shielding layer in this order (tank inner wall surface / anticorrosive coating film layer / mastic / heat shielding layer) on the inner wall surface of an LNG carrier tank, wherein the anticorrosive coating film layer is formed from the rust preventive pigment-containing polyfunctional epoxy resin paint composition as claimed in any one of from claim 1 to claim 13.

19. A method for preventing corrosion of steel materials which process comprises coating the surface of a substrate with an anticorrosive coating film layer formed from the rust preventive pigment-containing polyfunctional epoxy resin paint composition as claimed in any one of from claim 1 to claim 13.

20. A method for preventing corrosion of steel materials which process comprises applying, on the surface of a substrate, a paint comprising the rust preventive pigment-containing polyfunctional epoxy resin paint composition as claimed in any one of from claim 1 to claim 13 and having a paint solution viscosity, measured with #4 Ford cup, regulated to be from 10 sec to 20 sec in an amount such that the dried coating film has a thickness of from 10 $\mu$m to 40 $\mu$m.

21. A rust preventive pigment-containing polyfunctional epoxy resin paint composition set comprising
a main unit which comprises a main component containing the polyfunctional epoxy resin (A) as claimed in any one of from claim 1 to claim 13 and
a curing agent unit which comprises a curing agent component containing the modified aliphatic polyamine (B) as claimed in any one of from claim 1 to claim 13,
wherein at least the rust preventive pigment (C), the silane coupling agent (D) and the moisture absorbent (E) are contained independently in the main component and/or the curing agent component.

**Patentansprüche**

1. Rostschutzpigment-haltige polyfunktionelle Epoxidharzlackzusammensetzung umfassend:

(A) ein polyfunktionelles Epoxidharz,
(B) ein modifiziertes aliphatisches Polyamin,
(C) ein Rostschutzpgiment,
(D) einen Silanhaftvermittler und
(E) ein Feuchtigkeitsabsorptionsmittel,

wobei das polyfunktionelle Epoxidharz (A) 6 bis 9 Epoxidgruppen, bestimmt durch einen theoretischen Wert, der durch Dividieren seines zahlengemittelten Molekulargewichts Mn (gemessen mit GPC bezogen auf den Polystyrolstandard, worauf nachfolgend Bezug genommen wird) durch das Epoxidäquivalent berechnet wird, enthält.

2. Rostschutzpigment-haltige polyfunktionelle Epoxidharzlackzusammensetzung gemäß Anspruch 1, wobei das polyfunktionelle Epoxidharz (A) ein zahlengemitteltes Molekulargewicht von nicht weniger als 5.000 und ein Epoxidäquivalent von nicht weniger als 700 aufweist.

3. Rostschutzpigment-haltige polyfunktionelle Epoxidharzlackzusammensetzung gemäß Anspruch 1 oder 2, wobei das polyfunktionelle Epoxidharz (A) ein zahlengemitteltes Molekulargewicht von 5.500 bis 9.000 und ein Epoxidäquivalent von 750 bis 1.000 aufweist.

4. Rostschutzpigment-haltige polyfunktionelle Epoxidharzlackzusammensetzung gemäß irgendeinem der Ansprüche 1 bis 3, wobei das modifizierte aliphatische Polyamin (B) hergestellt wird, indem ein festes Epoxidharz vom Bisphenol A-Typ einer Additionsreaktion mit Ethylendiamin oder seiner Verbindung zur Bildung eines Addukts unterzogen wird und es mit einem Lösungsmittel verdünnt wird.

5. Rostschutzpigment-haltige polyfunktionelle Epoxidharzlackzusammensetzung gemäß irgendeinem der Ansprüche 1 bis 4, wobei das Rostschutzpigment (C) mindestens eine oder zwei oder mehrere Verbindungen, ausgewählt aus der Gruppe bestehend aus Zinkpulver, Zinklegierungspulver, Zinkphosphatverbindungen, Calciumphosphatverbindungen, Aluminiumphosphatverbindungen, Magnesiumphosphatverbindungen, Zinkphosphitverbindungen, Calciumphosphitverbindungen, Aluminiumphosphitverbindungen, Strontiumphosphitverbindungen, Aluminiumtripolyphosphatverbindungen, Molybdatverbindungen, Zinkcyanamidverbindungen, Boratverbindungen, Nitroverbindungen und Mischoxiden, ist.

6. Rostschutzpigment-haltige polyfunktionelle Epoxidharzlackzusammensetzung gemäß irgendeinem der Ansprüche 1 bis 5, wobei der Silanhaftvermittler (D) mindestens einer, ausgewählt aus der Gruppe bestehend aus β-(3,4-Epoxycyclohexyl)ethyltrimethoxysilan, γ-Glycidoxypropyltrimethoxysilan, γ-Glycidoxypropylmethyldiethoxysilan, N-β-(Aminoethyl)γ-aminopropyltrimethoxysilan, N-β-(Aminoethyl)γ-aminopropylmethyldimethoxysilan, γ-Aminopropyltriethoxysilan, N-Phenyl-γ-aminopropyltrimethoxysilan und γ-Chlorpropyltrimethoxysilan, ist.

7. Rostschutzpigment-haltige polyfunktionelle Epoxidharzlackzusammensetzung gemäß irgendeinem der Ansprüche 1 bis 6, wobei das Feuchtigkeitsabsorptionsmittel (E) mindestens eines oder zwei oder mehrere, ausgewählt aus der Gruppe bestehend aus synthetischem Zeolith, Orthomethylformiat, Orthoethylformiat, Tetraethoxysilan (Ethylsilicat 28) und Erst-Hydrolysekondensaten von Tetraethylsilicaten (Ethylsilicat 40), ist.

8. Rostschutzpigment-haltige polyfunktionelle Epoxidharzlackzusammensetzung gemäß irgendeinem der Ansprüche 1 bis 7, die ferner ein Pigment (F) umfasst.

9. Rostschutzpigment-haltige polyfunktionelle Epoxidharzlackzusammensetzung gemäß irgendeinem der Ansprüche 1 bis 8, wobei das Pigment (F) mindestens eines ausgewählt aus der Gruppe bestehend aus Calciumcarbonat, Ton, Talk, Silica, Glimmer, sedimentiertem Barium, Kaliumfeldspat, Albit, Zirkoniumsilicat, Zinkoxid, Titanoxid, rotes Eisenoxid, Eisenoxid, Ruß, Phthalocyaningrün und Phthalocyaninblau, ist.

10. Rostschutzpigment-haltige polyfunktionelle Epoxidharzlackzusammensetzung gemäß irgendeinem der Ansprüche 1 bis 9, die ferner ein organisches Lösungsmittel (G) umfasst, das geeignet ist, Epoxidharze zu lösen.

11. Rostschutzpigment-haltige polyfunktionelle Epoxidharzlackzusammensetzung gemäß irgendeinem der Ansprüche 1 bis 10, die darüber hinaus mindestens einen Lackzusatz, ausgewählt aus Dispergiermitteln, Eindickern, Antiverlaufmitteln, Thixotropiermitteln, Antiabsetzmitteln und Antifarbsegrationsmitteln, umfasst.

12. Rostschutzpigment-haltige polyfunktionelle Epoxidharzlackzusammensetzung gemäß irgendeinem der Ansprüche 1 bis 11, die Folgendes umfasst:

das polyfunktionelle Epoxidharz (A) in einer Menge von 5 Gew.% bis 50 Gew.%,
das modifizierte aliphatische Polyamin (B) in einer Menge von 5 Gew.% bis 40 Gew.%,
das Rostschutzpigment (C) in einer Menge von 15 Gew.% bis 70 Gew.%,
den Silanhaftvermittler (D) in einer Menge von 0,1 Gew.% bis 3 Gew.% und
das Feuchtigkeitabsorptionsmittel (E) in einer Menge von 0,1 Gew.% bis 3 Gew.%, mit der Maßgabe, dass der Gehalt von jeder der Komponenten (A) bis (E) ein auf den Feststoffgehalt umgerechneter Wert ist und die Gesamtmenge der Feststoffgehalte in dem Lack 100 Gew.% beträgt, worauf auch nachfolgend Bezug genommen wird.

**13.** Rostschutzpigment-haltige polyfunktionelle Epoxidharzlackzusammensetzung gemäß irgendeinem der Ansprüche 1 bis 11, die Folgendes umfasst:

das polyfunktionelle Epoxidharz (A) in einer Menge von 10 Gew.% bis 40 Gew.%,
das modifizierte aliphatische Polyamin (B) in einer Menge von 5 Gew.% bis 30 Gew.%,
das Rostschutzpigment (C) in einer Menge von 20 Gew.% bis 60 Gew.%,
den Silanhaftvermittler (D) in einer Menge von 1 Gew.% bis 3 Gew.% und
das Feuchtigkeitabsorptionsmittel (E) in einer Menge von 0,3 Gew.% bis 2 Gew.%, mit der Maßgabe, dass die Gesamtmenge der Feststoffgehalte in dem Lack 100 Gew.% beträgt.

**14.** Korrosionsschutzbeschichtungsfilm, gebildet aus den Rostschutzpigment-haltigen polyfunktionellen Epoxidharzlackzusammensetzungen gemäß irgendeinem der Ansprüche 1 bis 13.

**15.** Substrat beschichtet mit einem Beschichtungsfilm, das durch Beschichten einer Oberfläche mit einem Korrosionsschutzbeschichtungsfilm erhalten wird, der aus der Rostschutzpigment-haltigen polyfunktionellen Epoxidharzlackzusammensetzung gemäß irgendeinem der Ansprüche 1 bis 13 gebildet ist.

**16.** Innenwandoberfläche in einem Schiffstank, beschichtet mit einem Beschichtungsfilm, wobei die Oberfläche mit einem Korrosionsschutzbeschichtungsfilm beschichtet ist, der aus der Rostschutzpigment-haltigen polyfunktionellen Epoxidharzlackzusammensetzung gemäß irgendeinem der Ansprüche 1 bis 13 gebildet ist.

**17.** Innenwandoberfläche in einem Tank eines LNG-Tankers, beschichtet mit einem Beschichtungsfilm, wobei die Oberfläche mit einem Korrosionsschutzbeschichtungsfilm beschichtet ist, der aus der Rostschutzpigment-haltigen polyfunktionellen Epoxidharzlackzusammensetzung gemäß irgendeinem der Ansprüche 1 bis 13 gebildet ist.

**18.** Laminatstruktur, erhältlich durch Laminieren einer Korrosionsschutzbeschichtungsfilmschicht, eines Mastix (Harzstrick), der die Korrosionsschutzbeschichtungsfilmschicht und eine Wärmeschutzschicht bindet, und der Wärmeschutzschicht in der Reihenfolge (Tankinnenwandoberfläche / Korrosionsschutzbeschichtungsfilmschicht / Mastix / Wärmeschutzschicht) auf die Innenwandoberfläche eines Tanks eines LNG-Tankers, wobei die Korrosionsschutzbeschichtungsfilmschicht aus der Rostschutzpigment-haltigen polyfunktionellen Epoxidharzlackzusammensetzung gemäß irgendeinem der Ansprüche 1 bis 13 gebildet ist.

**19.** Verfahren zur Verhinderung von Korrosion von Stahlmaterialien, wobei das Verfahren das Beschichten der Oberfläche eines Substrats mit einer Korrosionsschutzbeschichtungsfilmschicht umfasst, die aus der Rostschutzpigment-haltigen polyfunktionellen Epoxidharzlackzusammensetzung gemäß irgendeinem der Ansprüche 1 bis 13 gebildet ist.

**20.** Verfahren zur Verhinderung von Korrosion von Stahlmaterialien, wobei das Verfahren das Auftragen eines Lacks umfasst, der die Rostschutzpigment-haltige polyfunktionelle Epoxidharzlackzusammensetzung gemäß irgendeinem der Ansprüche 1 bis 13 umfasst und eine mit einem Nr. 4-Ford-Becher gemessene Lacklösungsviskosität, eingestellt auf 10 Sekunden bis 20 Sekunden, aufweist, auf die Oberfläche eines Substrats in einer Menge, dass der getrocknete Beschichtungsfilm eine Dicke von 10 μm bis 40 μm aufweist.

**21.** Rostschutzpigment-haltiges polyfunktionelles Epoxidharzlackzusammensetzungsset, umfassend
eine Haupteinheit, die eine Hauptkomponente umfasst, die das polyfunktionelle Epoxidharz (A) gemäß irgendeinem der Ansprüche 1 bis 13 enthält, und
eine Härtungsmitteleinheit, die eine Härtungsmittelkomponente umfasst, die das modifizierte aliphatische Polyamin (B) gemäß irgendeinem der Ansprüche 1 bis 13 enthält,
wobei zumindest das Rostschutzpigment (C), der Silanhaftvermittler (D) und das Feuchtigkeitsabsorptionsmittel (E) unabhängig voneinander in der Hauptkomponente und/oder der Härtungsmittelkomponente enthalten sind.

**Revendications**

**1.** Composition de peinture à base de résine époxy polyfonctionnelle contenant un pigment antirouille comprenant :

(A) une résine époxy polyfonctionnelle,
(B) une polyamine aliphatique modifiée,

(C) un pigment antirouille,
(D) un agent de couplage au silane et
(E) un absorbant d'humidité,

dans laquelle la résine époxy polyfonctionnelle (A) contient de 6 à 9 groupes époxy, tel que déterminé avec une valeur théorique calculée en divisant son poids moléculaire moyen en nombre Mn (mesuré par GPC par rapport à des standards de polystyrène, mentionnés ci-après) par un équivalent époxy.

2. Composition de peinture à base de résine époxy polyfonctionnelle contenant un pigment antirouille selon la revendication 1 dans laquelle la résine époxy polyfonctionnelle (A) a un poids moléculaire moyen en nombre de pas moins de 5 000 et un équivalent époxy de pas moins de 700.

3. Composition de peinture à base de résine époxy polyfonctionnelle contenant un pigment antirouille selon la revendication 1 ou 2 dans laquelle la résine époxy polyfonctionnelle (A) a un poids moléculaire moyen en nombre de 5 500 à 9 000 et un équivalent époxy de 750 à 1 000.

4. Composition de peinture à base de résine époxy polyfonctionnelle contenant un pigment antirouille selon l'une quelconque de la revendication 1 à la revendication 3 dans laquelle la polyamine aliphatique modifiée (B) est préparée en soumettant une résine époxy solide de type bisphénol A à une réaction d'addition sur une éthylènediamine ou son composé pour former un produit d'addition et en le diluant avec un solvant.

5. Composition de peinture à base de résine époxy polyfonctionnelle contenant un pigment antirouille selon l'une quelconque de la revendication 1 à la revendication 4 dans laquelle le pigment antirouille (C) est au moins un ou deux composé(s) ou plus choisi(s) parmi le groupe consistant en une poudre de zinc, une poudre d'alliage de zinc, des composés phosphate de zinc, des composés phosphate de calcium, des composés phosphate d'aluminium, des composés phosphate de magnésium, des composés phosphite de zinc, des composés phosphite de calcium, des composés phosphite d'aluminium, des composés phosphite de strontium, des composés tripolyphosphate d'aluminium, des composés molybdate, des composés cyanamide de zinc, des composés borate, des composés nitro et des oxydes composites.

6. Composition de peinture à base de résine époxy polyfonctionnelle contenant un pigment antirouille selon l'une quelconque de la revendication 1 à la revendication 5 dans laquelle l'agent de couplage au silane (D) est au moins un choisi parmi le groupe consistant en
le β-(3,4-époxycyclohexyl)éthyltriméthoxysilane,
le γ-glycidoxypropyltriméthoxysilane,
le γ-glycidoxypropylméthyldiéthoxysilane,
le N-β(aminoéthyl)γ-aminopropyltriméthoxysilane,
le N-β(aminoéthyl) γ-aminopropylméthyldiméthoxysilane,
le γ-aminopropyltriéthoxysilane,
le N-phényl-γ-aminopropyltriméthoxysilane et
le γ-chloropropyltriméthoxysilane.

7. Composition de peinture à base de résine époxy polyfonctionnelle contenant un pigment antirouille selon l'une quelconque de la revendication 1 à la revendication 6 dans laquelle l'absorbant d'humidité (E) est au moins un ou deux ou plus choisi (s) parmi le groupe consistant en une zéolite synthétique, un formate d'orthométhyle, un formate d'orthoéthyle, un tétraéthoxysilane (silicate d'éthyle 28) et des condensés initiaux d'hydrolyse de silicates de tétraéthyle (silicate d'éthyle 40).

8. Composition de peinture à base de résine époxy polyfonctionnelle contenant un pigment antirouille selon l'une quelconque de la revendication 1 à la revendication 7 qui comprend en outre un pigment (F).

9. Composition de peinture à base de résine époxy polyfonctionnelle contenant un pigment antirouille selon l'une quelconque de la revendication 1 à la revendication 8 dans laquelle le pigment (F) est au moins un choisi parmi le groupe consistant en un carbonate de calcium, une argile, un talc, une silice, un mica, un baryum de sédimentation, un feldspath de potassium, une albite, un silicate de zirconium, un oxyde de zinc, un oxyde de titane, un oxyde de fer rouge, un oxyde de fer, un noir de carbone, un vert de phtalocyanine et un bleu de phtalocyanine.

10. Composition de peinture à base de résine époxy polyfonctionnelle contenant un pigment antirouille selon l'une quelconque de la revendication 1 à la revendication 9 qui comprend en outre un solvant organique (G) apte à dissoudre des résines époxy.

11. Composition de peinture à base de résine époxy polyfonctionnelle contenant un pigment antirouille selon l'une quelconque de la revendication 1 à la revendication 10, qui comprend en outre au moins un additif pour peinture choisi parmi des dispersants, des épaississants, des agents anti-coulures, un agent thixotrope, des agents anti-sédimentation et des agents anti-ségrégation de couleurs.

12. Composition de peinture à base de résine époxy polyfonctionnelle contenant un pigment antirouille selon l'une quelconque de la revendication 1 à la revendication 11, qui comprend :

la résine époxy polyfonctionnelle (A) dans une quantité de 5% en poids à 50% en poids,
la polyamine aliphatique modifiée (B) dans une quantité de 5% en poids à 40% en poids,
le pigment antirouille (C) dans une quantité de 15% en poids à 70% en poids,
l'agent de couplage au silane (D) dans une quantité de 0,1% en poids à 3% en poids, et
l'absorbant d'humidité (E) dans une quantité de 0,1% en poids à 3% en poids, sous réserve que la teneur de chacun des composants de (A) à (E) soit une valeur convertie en teneur en solides et que la quantité totale des teneurs en solides dans la peinture soit 100% en poids, également mentionnée ci-après.

13. Composition de peinture à base de résine époxy polyfonctionnelle contenant un pigment antirouille selon l'une quelconque de la revendication 1 à la revendication 11, qui comprend :

la résine époxy polyfonctionnelle (A) dans une quantité de 10% en poids à 40% en poids,
la polyamine aliphatique modifiée (B) dans une quantité de 5% en poids à 30% en poids,
le pigment antirouille (C) dans une quantité de 20% en poids à 60% en poids,
l'agent de couplage au silane (D) dans une quantité de 1% en poids à 3% en poids, et
l'absorbant d'humidité (E) dans une quantité de 0,3% en poids à 2% en poids, sous réserve que la quantité totale des teneurs en solides dans la peinture soit 100% en poids.

14. Film de revêtement anticorrosion formé à partir des compositions de peinture à base de résine époxy polyfonctionnelle contenant un pigment antirouille selon l'une quelconque de la revendication 1 à la revendication 13.

15. Substrat revêtu avec un film de revêtement obtenu par revêtement d'une surface avec un film de revêtement anticorrosion formé à partir de la composition de peinture à base de résine époxy polyfonctionnelle contenant un pigment antirouille selon l'une quelconque de la revendication 1 à la revendication 13.

16. Surface de paroi intérieure revêtue avec un film de revêtement dans une citerne de navire, laquelle surface est revêtue avec un film de revêtement anticorrosion formé à partir de la composition de peinture à base de résine époxy polyfonctionnelle contenant un pigment antirouille selon l'une quelconque de la revendication 1 à la revendication 13.

17. Surface de paroi intérieure revêtue avec un film de revêtement dans une citerne de méthanier, laquelle surface est revêtue avec un film de revêtement anticorrosion formé à partir de la composition de peinture à base de résine époxy polyfonctionnelle contenant un pigment antirouille selon l'une quelconque de la revendication 1 à la revendication 13.

18. Structure stratifiée pouvant être obtenue par stratification d'une couche de film de revêtement anticorrosion, d'un mastic (corde de résine) qui lie la couche de film de revêtement anticorrosion et une couche de protection contre la chaleur, et de la couche de protection contre la chaleur dans cet ordre (surface de paroi intérieure de citerne / couche de film de revêtement anticorrosion / mastic / couche de protection contre la chaleur) sur la surface de paroi intérieure d'une citerne de méthanier, dans laquelle la couche de film de revêtement anticorrosion est formée à partir de la composition de peinture à base de résine époxy polyfonctionnelle contenant un pigment antirouille selon l'une quelconque de la revendication 1 à la revendication 13.

19. Procédé de prévention de la corrosion de matériaux en acier, lequel procédé comprend le revêtement de la surface d'un substrat avec une couche de film de revêtement anticorrosion formée à partir de la composition de peinture à base de résine époxy polyfonctionnelle contenant un pigment antirouille selon l'une quelconque de la revendication 1 à la revendication 13.

EP 1 947 154 B1

**20.** Procédé de prévention de la corrosion de matériaux en acier, lequel procédé comprend l'application, sur la surface d'un substrat, d'une peinture comprenant la composition de peinture à base de résine époxy polyfonctionnelle contenant un pigment antirouille selon l'une quelconque de la revendication 1 à la revendication 13 et ayant une viscosité de peinture en solution, mesurée avec un déversoir Ford 4, régulée pour être de 10 s à 20 s dans une quantité telle que le film de revêtement séché a une épaisseur de 10 $\mu$m à 40 $\mu$m.

**21.** Ensemble de composition de peinture à base de résine époxy polyfonctionnelle contenant un pigment antirouille comprenant

une unité principale qui comprend un composant principal contenant la résine époxy polyfonctionnelle (A) selon l'une quelconque de la revendication 1 à la revendication 13 et

une unité d'agent de durcissement qui comprend un composant agent de durcissement contenant la polyamine aliphatique modifiée (B) selon l'une quelconque de la revendication 1 à la revendication 13,

dans lequel au moins le pigment antirouille (C), l'agent de couplage au silane (D) et l'absorbant d'humidité (E) sont contenus indépendamment dans le composant principal et/ou le composant agent de durcissement.

27

EP 1 947 154 B1

FIG. 1

Thickness of the primer plus the mastic: 1.5 mm

8

8

8

70    50    20    50    70

50

FIG. 2

Tensile " head " Metalic Support

Thickness of the primer plus the mastic: 1.5 mm

Diameter: 56.4 mm, Thickness: 10 mm

Tensile " head " Metalic Support

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H101998219138 A
- JP H8199657417 A
- JP H71995171497 A
- JP H91997206675 A
- JP 2000239570 A
- JP 2002086066 A

- JP 2005074272 A
- EP 0846710 A1
- JP 2003171611 A
- JP 2005015572 A
- JP H81996127734 A
- JP 2002097407 A